(19) Europäisches Patentamt / European Patent Office / Office européen des brevets

(11) **EP 2 485 295 B1**

(12) **EUROPEAN PATENT SPECIFICATION**

(45) Date of publication and mention
of the grant of the patent:
**20.03.2019 Bulletin 2019/12**

(51) Int Cl.:
*H01M 10/052* (2010.01)   *H01M 2/16* (2006.01)
*H01M 2/14* (2006.01)

(21) Application number: **10820677.2**

(22) Date of filing: **30.09.2010**

(86) International application number:
**PCT/JP2010/067137**

(87) International publication number:
**WO 2011/040562 (07.04.2011 Gazette 2011/14)**

(54) **POROUS MEMBRANE FOR SECONDARY BATTERY, AND SECONDARY BATTERY**

PORÖSE MEMBRAN FÜR EINE SEKUNDÄRBATTERIE UND SEKUNDÄRBATTERIE

MEMBRANE POREUSE POUR BATTERIE SECONDAIRE ET BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 JP 2009226411**

(43) Date of publication of application:
**08.08.2012 Bulletin 2012/32**

(73) Proprietor: **Zeon Corporation
Tokyo 100-8246 (JP)**

(72) Inventors:
• **WAKIZAKA, Yasuhiro
Tokyo 100-8246 (JP)**
• **YOSHIDA, Naoki
Tokyo 100-8246 (JP)**

(74) Representative: **Maiwald Patent- und
Rechtsanwaltsgesellschaft mbH
Elisenhof
Elisenstraße 3
80335 München (DE)**

(56) References cited:
EP-A1- 1 965 454        WO-A1-97/01870
WO-A1-2007/066768    WO-A1-2010/134501
JP-A- 3 291 848         JP-A- 9 087 571
JP-A- 11 131 392        JP-A- 61 014 160
JP-A- 61 023 637        JP-A- 2004 241 135
JP-A- 2005 336 353     JP-A- 2008 287 888
JP-A- 2008 546 135     JP-A- 2010 027 218

• Haruhisa Yamamoto: "Chapter 13: Binder Materials" In: "These Ten Years and Future of Rechargeable Battery Materials", 1 May 2003 (2003-05-01), CMC Books, Tokyo, Japan, XP055114274, ISBN: 978-4-88-231395-3 pages 161-172, * pages 161-164; table 1 *

**Description**

TECHNICAL FIELD

The present invention relates to a porous membrane, and more specifically relates to a porous membrane, formed on an electrode surface of a lithium-ion secondary battery and able to contribute to the improvement in film uniformity, flexibility and cycle characteristic of a battery. Also, the present invention relates to a secondary battery electrode provided with the porous membrane.

BACKGROUND ART

A lithium-ion secondary battery shows the highest energy density in commercially available batteries, and is often used particularly for small electronics. Also, it is expected to apply to an automobile, so that it is required to increase capacity, extend lifetime and further improve safety.

A polyolefin-based, such as polyethylene and polypropylene, organic separator is generally used in the lithium-ion secondary battery for preventing short circuit between a positive electrode and a negative electrode. Since the polyolefin organic separator is melted at 200°C or lower, volume change such as contraction and meltdown can be caused when the battery is heated to a high temperature due to inside and/or outside stimuli, resulting in short circuit between the positive electrode and the negative electrode, release of electrical energy, and the like which may cause explosion, etc.

To solve these problems, it has been proposed to stack a layer (porous membrane) including a nonconductive particle such as inorganic particle on the polyolefin organic separator or electrode (positive electrode or negative electrode). It has further been proposed to include a hot-melt polymer particle or polymer particle for increasing degree of swelling to an electrolytic solution by heat in the porous membrane in order to prevent thermal runaway caused by abnormal reaction of the battery.

For example, Patent Document 1 discloses a porous membrane containing a polymer particle such as cross-linked polystyrene, cross-linked acrylic resin and cross-linked fluorine resin as a swellable microparticle for increasing degree of swelling to an electrolytic solution by heat and a polymer particle such as polyethylene as a hot-melt microparticle which melts by heat.

Also, Patent Document 2 discloses a porous membrane containing a polymer particle such as cross-linked polystyrene, cross-linked acrylic resin and cross-linked fluorine resin as a swellable microparticle for increasing degree of swelling to an electrolytic solution by heat, EVA as a binder, and flexible polymer such as ethylene-acrylic acid copolymer, fluorine-containing rubber and SBR. It discloses that these porous membranes can improve safety at the time of abnormal heat and reliability to internal short circuit.

Furthermore, Patent Document 3 discloses a porous membrane constituted by binding at least 2 kinds of microparticles including an organic microparticle having a melting point of 80°C to 150°C and a heat-resistant microparticle having heatproof temperature of 160°C or more. Patent Document 4 discloses a porous membrane containing fibrous material which is substantially undeformable at 150°C, and an organic microparticle having a melting point of 80 to 130°C

Furthermore, Patent Document 5 discloses a separator for an electrochemical device, comprising a porous first separator layer and a porous second separator layer, wherein the first separator layer comprises, as a main ingredient, at least one kind of resin selected from the group consisting of resin A that has a melting point in a range of 80°C to 130°C, and resin B that absorbs a nonaqueous electrolyte and swells due to heating and whose swelling degree is increased as the temperature rises, wherein the resin A is at least one resin selected from the group consisting of polyethylene, an ethylene-vinyl monomer copolymer, and a polyolefin wax, wherein the resin B is a crosslinked resin having a glass transition point in a range of 75 °C to 125°C and wherein the resin B is at least one crosslinked body of resin selected from the group consisting of a styrene resin, styrene-butadiene rubber, an acrylic resin, a polyalkylene oxide, a fluororesin, and a derivative thereof.

[Patent Document 1] Japanese Unexamined Patent Publication No. 2008-004441
[Patent Document 2] Japanese Unexamined Patent Publication No. 2008-305783 (corresponding US Patent Application Publication 2009-67119)
[Patent Document 3] Japanese Unexamined Patent Publication No. 2006-139978
[Patent Document 4] Japanese Unexamined Patent Publication No. 2006-164761 (corresponding US Patent Application Publication 2007-264577)
[Patent Document 5] EP 1 965 454 A1

SUMMARY OF INVENTION

PROBLEM TO BE SOLVED BY THE INVENTION

However, according to study of the present inventors, the methods disclosed in Patent Documents 1 to 5 still show insufficient swellability to the electrolytic solution in the porous membrane layer, resulting in inhibiting the movement of lithium to lower output characteristics and long-term cycle characteristics.

Therefore, the purpose of the present invention is to provide a porous membrane used for a secondary battery such as lithium-ion secondary battery, showing further improved output characteristics and long-term cycle characteristics than conventional products.

MEANS FOR SOLVING THE PROBLEM

As a result of keen study for solving the above problems, the present inventors have found that by combining two kinds of polymer particles having different particle diameter and glass-transition temperature respectively as a polymer particle, the polymer particle having large particle diameter and high glass-transition temperature contributes to porosity while the polymer particle having small particle diameter and low glass-transition temperature works as a binder to mutually bind the polymer particles having large particle diameter and high glass-transition temperature and also contributes to high swellability to an electrolytic solution, resulting in showing high electrolytic solution impregnation and electrolytic solution retention, and more improving long-term cycle characteristics as well as high output characteristics, and come to complete the present invention.

The present invention for solving the above problems includes the following matters

(1) A porous membrane for a secondary battery comprising a polymer particle A, wherein the polymer constituting the polymer particle A is a styrene-based polymer, having a number average particle diameter of 0.4 $\mu$m or more to less than 10 $\mu$m and a glass-transition point of 65°C or more, and a polymer particle B, wherein the monomer constituting the polymer particle B includes an acrylic monomer or a methacrylic monomer, having a number average particle diameter of 0.04 $\mu$m or more to less than 0.3 $\mu$m and a glass-transition point of 15°C or less.

(2) The porous membrane as set forth in the above (1), wherein crystallinity of the polymer particle B is 40% or less and its main chain structure is a saturated structure.

(3) The porous membrane for a secondary battery as set forth in the above (1) or (2), further comprising a nonconductive particle having a melting point of 160°C.

(4) The porous membrane for a secondary battery as set forth in the above (3), wherein an aspect ratio of the nonconductive particle is 5 or more.

(5) A slurry for porous membrane of a secondary battery, comprising a polymer particle A wherein the polymer constituting the polymer particle A is a styrene-based polymer, having a number average particle diameter of 0.4 $\mu$m or more to less than 10 $\mu$m and a glass-transition point of 65°C or more, a polymer particle B, wherein the monomer constituting the polymer particle B includes an acrylic monomer or a methacrylic monomer, having a number average particle diameter of 0.04 $\mu$m or more to less than 0.3 $\mu$m and a glass-transition point of 15°C or less, and a solvent.

(6) A method of producing a porous membrane for a secondary battery, comprising: coating a slurry for porous membrane of a secondary battery onto a base material, the slurry comprising a polymer particle A, wherein the polymer constituting the polymer particle A is a styrene-based polymer, having a number average particle diameter of 0.4 $\mu$m or more to less than 10 $\mu$m and a glass-transition point of 65 °C or more, a polymer particle B, wherein the monomer constituting the polymer particle B includes an acrylic monomer or a methacrylic monomer, having a number average particle diameter of 0.04 $\mu$m or more to less than 0.3 $\mu$m and a glass-transition point of 15°C or less and solvent.

(7) A secondary battery electrode, wherein an electrode material mixture layer comprising binder for an electrode material mixture layer and an electrode active material is attached to a collector; and the porous membrane as set forth in any one of the above (1) to (4) is stacked on a surface of the electrode material mixture layer.

(8) A separator for a secondary battery, wherein the porous membrane as set forth in any one of the above (1) to (4) is stacked on an organic separator.

(9) A secondary battery comprising a positive electrode, a negative electrode, a separator and an electrolytic solution, wherein the porous membrane as set forth in any one of the above (1) to (4) is stacked on at least any one of the above positive electrode, negative electrode and separator.

EFFECTS OF THE INVENTION

According to the present invention, the porous membrane comprises specific polymer particles, by which advanced electrolytic solution retention is achieved in the porous membrane to further improve output characteristics and long-term cycle characteristics of the obtained secondary battery.

EMBODIMENTS OF THE INVENTION

Hereinafter, the present invention is described in detail.

The porous membrane for a secondary battery of the present invention comprises the polymer particle A having an average particle diameter of 0.4 $\mu$m or more to less than 10 $\mu$m and a glass-transition point of 65°C or more, and the polymer particle B having an average particle diameter of 0.04 $\mu$m or more to less than 0.3 $\mu$m and a glass-transition point of 15°C or less.

By using a polymer particle having an average particle diameter of 0.4 $\mu$m or more to less than 10 $\mu$m and a glass-transition point of 65°C or more as the polymer particle A, it is possible to obtain a membrane having the predetermined uniform thickness as a porous membrane layer, and to reduce deterioration of battery performance due to impurities included in, for example, the inorganic filler.

By a polymer particle having an average particle diameter of 0.04 $\mu$m or more to less than 0.3 $\mu$m and a glass-transition point of 15°C or less using as the polymer particle B, it is possible to reduce internal resistance by swelling of the polymer particle in the electrolytic solution, resulting in improvement of output characteristics and cycle characteristics.

(Polymer Particle A)

The polymer particle A used in the present invention is a polymer particle having an average particle diameter of 0.4 $\mu$m or more to less than 10 $\mu$m, and a glass-transition point of 65°C or more. When the average particle diameter of the polymer particle A is less than 0.4 $\mu$m, sufficient thickness cannot be obtained as a porous membrane layer, and when the average particle diameter is 10 $\mu$m or more, the porous membrane layer may be thick to cause to increase internal resistance.

Note that the particle diameter of the polymer particles (polymer particle A and polymer particle B) is number average particle diameter obtained by measuring the diameter of 100 particle images randomly selected from a transmission electron micrograph and calculating as arithmetic average.

The glass-transition temperature of the polymer particle A is 65°C or more, preferably 75°C or more, further preferably 85°C or more. By making the glass-transition temperature of the polymer particle A within the above range, the polymer particle A can be melted at the time of thermal runaway, and internal resistance can be increased, so that shutdown effect can be obtained. On the other hand, when the glass-transition temperature of the polymer particle A is less than 65°C, the polymer particle can be melted at the time of drying, porosity can be reduced, and electrical resistance can be increased. Note that the upper limit of the glass-transition temperature of the polymer particle A is 150°C.

Note that the glass-transition temperature of the polymer particles (polymer particle A and polymer particle B) can be maintained by combining various monomers. The glass-transition temperature of the polymer particles (polymer particle A and polymer particle B) can be measured by DSC.

The polymer constituting the polymer particle A is a styrene-based polymer.

Components of the polymer particle A may include the following monomers, but are not limited to these.

The styrene-based polymer includes a polymer of aromatic vinyl monomers such as styrene, a homopolymer of styrene derivatives, and a copolymer of 2 or more monomers selected from aromatic vinyl and derivatives thereof. Content of an aromatic vinyl monomer unit in the styrene-based polymer is 60 mass% to 100 mass%, preferably 70 mass% to 100 mass%.

As the aromatic vinyl monomer and styrene derivatives, there may be mentioned styrene, chlorostyrene, vinyl toluene, t-butylstyrene, vinyl benzoate, methyl vinyl benzoate, vinylnaphthalene, chloromethyl styrene, hydroxy methyl styrene, $\alpha$-methyl styrene, 2,4-dimethyl styrene, divinylbenzene, etc.

Also, within the range not spoiling the effect of the present invention, other copolymerizable monomers can further be copolymerized. Such copolymerizable component mat include diene-based monomer, olefin-based monomer, acrylate-based monomer, fluorine-based monomer, urethane-based monomer, silicone-based monomer, polyamide-based or polyimide-based monomer, ester-based monomer, etc.

In embodiments not falling under the scope of the invention as claimed in the appended claims polymethacrylic acid ester-based polymers may be used as the polymer constituting the polymer particle A. The polymethacrylic acid ester is a homopolymer of methacrylic acid ester. In embodiments not falling under the scope of the invention as claimed in the appended claims methacrylic acid ester-based polymers may be used as the polymer constituting the polymer particle A. As the methacrylic acid ester, there may be mentioned methyl methacrylic acid, ethyl methacrylic acid, n-propyl methacrylic acid, isopropyl methacrylic acid, n-butyl methacrylic acid, t-butyl methacrylic acid and pentyl methacrylic acid.

In embodiments not falling under the scope of the invention as claimed in the appended claims vinyl-based polymers may be used as the polymer constituting the polymer particle A. Vinyl monomer constituting the vinyl-based polymer may include vinyl alcohol, vinyl acetate, vinyl stearate, etc.

The number average particle diameter of the polymer particle A is 0.4 $\mu$m or more to less than 10 $\mu$m, preferably 0.8 $\mu$m or more to 6 $\mu$m or less, more preferably 1 $\mu$m or more to 5 $\mu$m or less. By making the number average particle diameter of the polymer particle A within the above range, porosity of the porous membrane can be more attained.

The polymer particle A can be obtained by a method for directly obtaining a particle through dispersion polymerization, emulsion polymerization, suspension polymerization or microsuspension polymerization of the monomers constituting the polymer particle A in water-based medium.

Content ratio of the polymer particle A in the porous membrane is preferably 50 to 99 mass%, further preferably 60 to 99 mass%, most preferably 70 to 99 mass%. When the content ratio of the polymer particle A in the porous membrane is within the above range, it is possible to attain the sufficient effect of increased internal resistance due to melting of the polymer particle A on heating, and to maintain sufficient membrane thickness as a porous membrane.

(Polymer Particle B)

The polymer particle B used in the present invention is a polymer particle having a number average particle diameter of 0.04 $\mu$m or more to less than 0.3 $\mu$m and a glass-transition point of 15°C or less. By making the number average particle diameter of the polymer particle B within the above range, it is possible to sufficiently obtain binding points with the polymer particle A to show high binding property. When the number average particle diameter of the polymer particle B is less than 0.04 $\mu$m, the particles may easily be agglutinated; in contrast, when it is 0.3 $\mu$m or more, the binding points may be decreased to deteriorate binding property.

The glass-transition temperature of the polymer particle B used in the present invention is preferably -80°C or more to 15°C or less, more preferably -75°C or more to 5°C or less, particularly preferably -70°C or more to 0°C or less. By making the glass-transition temperature of the polymer particle B within the above range, it is possible to give flexibility to the porous membrane at room temperature and to reduce chap when taking up a roll or winding, crack in the porous membrane layer, etc. When the glass-transition temperature of the polymer particle B exceeds 15°C, flexibility of the porous membrane layer may be reduced to cause chap when taking up a roll or winding, crack in the porous membrane layer, etc.

It is preferable that the polymer particle B used in the present invention has crystallinity of 40% or less and that main chain structure is a saturated structure. Because the crystallinity of the polymer particle B is 40% or less and main chain structure is a saturated structure, it is possible to show swellability to the electrolytic solution, to obtain excellent oxidation resistance, and to inhibit cycle deterioration.

The crystallinity can be checked by X-ray in accordance with JIS K0131. Specifically, the crystallinity can be obtained by calculating from the rate of X-ray diffraction intensity from crystalline part to the whole X-ray diffraction intensity (the following formula).

$$Xc = K \cdot Ic/It$$

In the above formula, "Xc" is crystallinity of the tested sample, "Ic" is X-ray intensity diffraction from the crystalline part, "It" is the whole X-ray diffraction intensity and "K" is correction term, respectively.

When the main chain structure is a saturated structure, at least the main chain structure is saturated, and side chain may either be saturated or unsaturated. Specifically, it indicates the condition that there is no peak at 3100cm$^{-1}$ to 2900cm$^{-1}$ by infrared spectroscopy (IR) in accordance with JIS K0117.

It is possible to attain the crystallinity of the polymer constituting the polymer particle B of 40% or less, and to make the main chain structure a saturated structure by emulsion polymerization using a monomer having a double bond such as acrylic monomer, methacrylic monomer and vinyl ether-based monomer in the presence of a polymerization initiator. As the polymerization initiator used in the polymerization, for example, there may be mentioned organic peroxide such as lauroyl peroxide, diisopropyl peroxydicarbonate, di-2-ethyl hexyl peroxydicarbonate, t-butyl peroxypivalate and 3,3,5-trimethylhexanoyl peroxide, azo compound such as $\alpha,\alpha$'-azobisisobutyronitrile, or ammonium persulfate, potassium persulfate, etc.

The monomer constituting the polymer particle B includes an acrylic monomer or a methacrylic monomer. Acrylic monomers and methacrylic monomers are preferable; because cross-linking agglutinate due to the polymer hardly occurs when swelling to the electrolytic solution and dispersing particles having small particle diameter, and acrylic acid alkyl ester or methacrylic acid alkyl ester are particularly preferable.

As the acrylic monomer, there may be mentioned acrylic acid alkyl ester such as acrylic acid methyl ester, acrylic acid ethyl ester, acrylic acid propyl ester, acrylic acid isopropyl ester, acrylic acid butyl ester, acrylic acid-sec-butyl ester, acrylic acid-3-pentyl ester, acrylic acid heptyl ester, acrylic acid hexyl ester, acrylic acid octyl ester, acrylic acid hexadecyl ester, acrylic acid-1-ethyl propyl ester, acrylic acid cyclohexyl ester, acrylic acid phenyl ester, acrylic acid benzyl ester, acrylic acid-3-methoxypropyl ester, acrylic acid-3-methoxybutyl ester, acrylic acid-2-ethoxymethyl ester, acrylic acid-3-ethoxypropyl ester, acrylic acid-4-butoxycarbonyl phenyl ester, acrylic acid-4-cyanoethyl ester, acrylic acid-4-cyano-3-thiabutyl ester, acrylic acid-6-cyano-3-thia hexyl ester, acrylic acid-1H,H-heptafluorobutyl ester, acrylic acid-2,2,2-trifluoroethyl ester, acrylic acid-5,5,5-trifluoro-3-oxapentyl ester, acrylic acid-4,4,5,5-tetrafluoro-3-hexapentyl ester, acrylic acid-2,2,3,3,3,5,5-heptafluoro-4-oxapentyl ester, acrylic acid-7,7,8,8-tetrafluoro-3,6-dioxaoctyl ester, acrylic acid-3-thiabutyl ester, acrylic acid-4-thiahexyl ester, acrylic acid-3-thiapentyl ester and acrylic acid-3-thia hexyl ester.

As the methacrylic monomer, there may be mentioned methacrylic acid alkyl ester such as methacrylic acid methyl ester, methacrylic acid ethyl ester, methacrylic acid propyl ester, methacrylic acid isopropyl ester, methacrylic acid butyl ester, methacrylic acid-sec-butyl ester, methacrylic acid-3-pentyl ester, methacrylic acid heptyl ester, methacrylic acid hexyl ester, methacrylic acid octyl ester, methacrylic acid decyl ester, methacrylic acid-3,5,5-trimethyl hexyl ester, methacrylic acid hexadecyl ester, methacrylic acid-1-ethyl propyl ester, methacrylic acid cyclohexyl ester, methacrylic acid phenyl ester, methacrylic acid benzil ester, methacrylic acid-3-methoxypropyl ester, methacrylic acid-3-methoxybutyl ester, methacrylic acid-2-ethoxymethyl ester, methacrylic acid-3-ethoxypropyl ester, methacrylic acid-4-butoxycarbonyl phenyl ester, methacrylic acid-4-cyano ethyl ester, methacrylic acid-4-cyano-3-thiabutyl ester, methacrylic acid-6-cyano-3-thiahexyl ester, methacrylic acid-1H,H-heptafluoro butyl ester, methacrylic acid-2,2,2-trifluoroethyl ester, methacrylic acid-5,5,5-trifluoro-3-oxapentyl ester, methacrylic acid-4,4,5,5-tetrafluoro-3-hexapentyl ester, methacrylic acid-2,2,3,3,3,5,5-heptafluoro-4-oxapentyl ester, methacrylic acid-7,7,8,8-tetrafluoro-3,6-dioxaoctyl ester, methacrylic acid-3-thiabutyl ester, methacrylic acid-4-thiahexyl ester, methacrylic acid-3-thiapentyl ester and methacrylic acid-3-thiahexyl ester.

In embodiments not falling under the scope of the invention as claimed in the appended claims vinyl ether-based monomers may be used as the monomer constituting the polymer particle B. As the vinyl ether-based monomer, there may be mentioned vinyl methyl ether, vinyl ethyl ether, vinyl propyl ether, vinyl isopropyl ether, vinyl butyl ether, vinyl sec-butyl ether, vinyl isobutyl ether, vinyl pentyl ether, vinyl hexyl ether, vinyl octyl ether, vinyl 2-ethyl hexyl ether, vinyl methyl thioether, etc.

In embodiments not falling under the scope of the invention as claimed in the appended claims epoxide-based monomers may be used as the monomer constituting the polymer particle B.

As the epoxide-based monomer, there may be mentioned methylene oxide, ethylene oxide, trimethylene oxide, tetraethylene oxide, propylene oxide, ethyl ethylene oxide, butylethylene oxide, ethoxymethyl ethylene oxide, allyloxymethyl ethylene oxide, 2,2-bischloromethyl trimethylene oxide, etc.

In embodiments not falling under the scope of the invention as claimed in the appended ester-based monomers may be used as the monomer constituting the polymer particle B.

As the ester-based monomer, there may be mentioned ethylene adipate, hexamethylene terephthalate, hexamethylene isophthalate, decamethylene isophthalate, adipoyl oxydecamethylene, oxy-2-butynylene oxysebacoyl, dioxyethylene oxymalonyl, dioxyethylene oxymethylmalonyl, dioxyethylene oxypentylmalonyl, dioxyethylene oxysebacoylmalonyl, dioxyethylene oxyadipoylmalonyl, oxypentamethylene oxyadipoyl, oxy-2,3-dibromobutadiene oxycarbonyl adipoyl, oxy-2,2,3,3,4,4-hexafluoropentamethylene oxyadipoyl, oxy-1,4-phenylene isopropylidene-1,4-phenylene oxysebacoyl, etc.

In embodiments not falling under the scope of the invention as claimed in the appended claims nitroso-based monomers may be used as the monomer constituting the polymer particle B. As the nitroso-based monomer, there may be mentioned oxytrifluoromethyl iminotetrafluoroethylene, oxy-2-bromotetrafluoroethyl iminotetrafluoroethylene, etc.

In embodiments not falling under the scope of the invention as claimed in the appended claims siloxane-based monomers may be used as the monomer constituting the polymer particle B. As the siloxane-based monomer, there may be mentioned dimethyl siloxane, diethyl siloxane, methyl phenyl siloxane, tri(dimethyl siloxane)-1,4-phenylene dimethylsilylene, tetra (dimethyl siloxane)-1,4-phenylene dimethyl silylene, tetra(dimethyl siloxane)-1,3-phenylene dimethylsilylene, penta(dimethyl siloxane)-1,4-phenylene dimethylsilylene, tri(dimethyl siloxane)oxy(methyl)trimethyl siloxysilylene, tri(dimethyl siloxane)oxy(methyl)-2-phenylethyl silylene, tri(dimethyl siloxane) oxy(methyl)phenyl silylene, tri(dimethyl siloxane)-1,4-phenyleneoxy-1,4-phenylene dimethylsilylene, tetra(dimethyl siloxane)-1,4-phenyleneoxy-1,4-phenylene dimethylsilylene, penta(dimethyl siloxane)-1,4-phenyleneoxy-1,4-phenylene dimethylsilylene, methyl-3,3,3-trifluoro pylsiloxane, tri(dimethyl siloxane)dimethyl silylene-B10-carborane, tetra(dimethyl siloxane)dimethyl silylene-BIO-carborane, penta(dimethyl siloxane)dimethyl silylene-B10-carborane, dimethyl siloxane dimethyl silylene-B5-carborane, etc.

In embodiments not falling under the scope of the invention as claimed in the appended claims sulfide-based monomers may be used as the monomer constituting the polymer particle B.

As the sulfide-based monomer, there may be mentioned thiomethylene, thioethylene, dithioethylene, tetrathioethylene, thiotrimethylene, thioisobutylene, thiopropylene, thio-1-ethyl ethylene, thioneopentylene, thiodifluoro methylene, dithiohexamethylene, dithiopentamethylene, dithiodecamethylene, trithiodecamethylene, oxyethylene dithioethylene, oxymethylene oxyethylene dithioethylene, oxytetramethylene dithiotetramethylene, thio-1-methy-1-3-oxotrimethylene, etc.

The polymer particle B used in the present invention may include other components in addition to the polymerization unit of the above monomer. As the other components, there may be mentioned a monomer containing hydroxyl group, a monomer containing N-methylol amide group, a monomer containing oxetanyl group, a monomer containing oxazoline group, etc.

As the monomer containing hydroxyl group, there may be mentioned unsaturated alcohol such as (meth)allyl alcohol, 3-butene-1-ol and 5-hexene-1-ol; alkanol ester of unsaturated carboxylic acid such as acrylic acid-2-hydroxy ethyl, acrylic acid-2-hydroxy propyl, methacrylic acid-2-hydroxy ethyl, methacrylic acid-2-hydroxy propyl, maleic acid di-2-hydroxy ethyl, maleic acid di-4-hydroxy butyl and itaconic acid di-2-hydroxy propyl; esters of polyalkylene glycol expressed by a general formula of $CH_2=CR_1-COO-(C_nH_{2n}O)_m-H$ (m is an integer of 2 to 9, n is an integer of 2 to 4, and $R_1$ is hydrogen or methyl group) and (meth) acrylic acid; mono(meth)acrylic acid esters of dihydroxy ester of dicarboxylic acid such as 2-hydroxyethyl-2'-(meth)acryloyl oxyphthalate and 2-hydroxy ethyl-2'-(meth)acryloyl oxysuccinate; vinyl ethers such as 2-hydroxy ethyl vinyl ether and 2-hydroxy propyl vinyl ether; mono(meth)allyl ethers of alkylene glycol such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether and (meth)allyl-6-hydroxyhexyl ether; polyoxyalkylene glycol mono(meth)allyl ethers such as ethylene glycol mono(meth)allyl ether and dipropylene glycol mono(meth)allyl ether; mono(meth)allyl ether of halogen substitute and hydroxy substitute of (poly)alkylene glycol such as glycerin mono(meth)allyl ether, (meth)allyl-2-chloro-3-hydroxy propyl ether and (meth)allyl 2-hydroxy-3-chloropropyl ether; mono(meth)allyl ether of polyhydric phenol such as eugenol and isoeugenol and halogen substitute thereof; (meth)allyl thioethers of alkylene glycol such as (meth)allyl-2-hydroxy ethyl thioether and (meth)allyl-2-hydroxy propyl thioether; etc.

As the monomer containing N-methylol amide group, there may be mentioned (meth)acrylic amides containing methylol group such as N-methylol (meth)acrylic amide, etc.

As the monomer containing oxetanyl group, there may be mentioned 3-((meth)acryloyl oxymethyl) oxetane, 3-((meth)acryloyl oxymethyl) -2-trifluoromethyl oxetane, 3-((meth)acryloyl oxymethyl)-2-phenyl oxetane, 2-((meth)acryloyl oxymethyl)oxetane, 2-((meth) acryloyl oxymethyl)-4-trifluoromethyl oxetane, etc.

As the monomer containing oxazoline group, there may be mentioned 2-vinyl-2-oxazoline, 2-vinyl-4-methyl-2-oxazoline, 2-vinyl-5-methyl 2-oxazoline, 2-isopropenyl-2-oxazoline, 2-isopropenyl-4-methyl-2-oxazoline, 2-isopropenyl-5-methyl-2-oxazoline, 2-isopropenyl-5-ethyl-2-oxazoline, etc.

When the above other components are included and when the glass-transition temperature of the whole polymer particle B is 15°C or less, the glass-transition temperature of the other components may be 15°C or more. Among these, for example, the other components are preferably components in which the polymer structure shows swellability to the electrolytic solution, such as acrylic monomer and methacrylic monomer because the obtained porous membrane has high electrolytic solution impregnation and electrolytic solution retention, and a secondary battery comprising the porous membrane shows long-term cycle characteristics.

The number average particle diameter of the polymer particle B used in the present invention is 0.04 $\mu$m or more to less than 0.3 $\mu$m, preferably 0.05 $\mu$m or more to 0.2 $\mu$m or less, more preferably 0.05 $\mu$m or more to 0.1 $\mu$m or less. By making the number average particle diameter of the polymer particle B within the above range, it is possible to hold a course for conducting lithium-ion even when the electrolytic solution is included to swell.

The content ratio of the polymer particle B in the porous membrane is preferably 1 to 50 mass%, further preferably 1 to 40 mass%, most preferably 1 to 30 mass%. When the content ratio of the polymer particle B in the porous membrane is within the above range, it is possible to show high swellability to the electrolytic solution, and to give flexibility to the porous membrane.

In the course of producing the polymer particle A and the polymer particle B used in the present invention, a dispersant may be used. In this case, the used dispersant may be those used in the conventional production, and the specific examples include benzene sulfonate such as dodecyl benzene sodium sulfonate and dodecyl phenyl ether sodium sulfonate; alkyl sulfate such as sodium lauryl sulfate and sodium tetradodecyl sulfate; sulfosuccinate such as sodium dioctyl sulfosuccinate and sodium dihexyl sulfosuccinate; fatty acid salt such as sodium laurate; ethoxysulfate such as polyoxy ethylene lauryl ether sodium sulfate and polyoxy ethylene nonyl phenyl ether sodium sulfate; alkane sulfonate; alkyl ether sodium phosphate; non-ionic emulsifier such as polyoxy ethylene nonyl phenyl ether, polyoxy ethylene sorbitan lauryl ester and polyoxy ethylene polyoxy propylene block copolymer; water-soluble polymer such as gelatin, maleic acid anhydride-styrene copolymer, polyvinyl pyrrolidone, sodium polyacrylic acid and polyvinyl alcohol having polymerization degree of 700 or more and saponification degree of 75% or more. These may be used alone or in combination of two or more. Among these, benzene sulfonate such as dodecyl benzene sodium sulfonate and dodecyl phenyl ether sodium sulfonate, alkyl sulfate such as sodium lauryl sulfate and sodium tetradodecyl sulfate are preferable, and in view of its excellent oxidation resistance, benzene sulfonate dodecyl benzene sulfonic acid sodium and dodecyl phenyl ether sodium sulfonate are further preferable. The amount of the dispersant can be arbitrarily set, and is normally 0.01 to 10 parts by mass or so per 100 parts by mass of the total amount of the monomers.

pH in the situation that the polymer particle A and the polymer particle B used in the present invention are dispersed in dispersion medium is preferably 5 to 13, further preferably 5 to 12, most preferably 10 to 12. When pH in the situation that the polymer particle A and the polymer particle B are dispersed in dispersion medium within the above range, preservation stability of the binder is improved and furthermore, mechanical stability can be improved.

As a pH adjuster for adjusting pH when the polymer particle A and the polymer particle B are dispersed in the dispersion medium, there may be illustrated hydroxide including alkali metal hydroxide such as lithium hydroxide, sodium hydroxide and potassium hydroxide, alkaline-earth metal hydroxide such as calcium hydroxide, magnesium hydroxide and barium hydroxide, metal hydroxide which belongs to the IIIA group in the long form of periodic table such as aluminum hydroxide, etc.; carbonate including alkali metal carbonate such as sodium carbonate and potassium carbonate, alkaline-earth metal carbonate such as carbonate magnesium, etc.; and as an organic amine, ethyl amine, there may be mentioned alkyl amines such as diethyl amine and propyl amine; alcohol amines such as monomethanol amine, monoethanol amine and monopropanol amine; ammoniums such as ammonia water; etc. Among these, in view of binding property and operability, alkali metal hydroxide is preferable, and sodium hydroxide, potassium hydroxide and lithium hydroxide are particularly preferable.

The polymer particle A and the polymer particle B used in the present invention is preferably obtained through the particulate metal removing process for removing particulate metal included in polymer dispersion liquid during the manufacturing process. When the content of particulate metal components included in the polymer dispersion liquid is 10 ppm or less, it is possible to prevent metal ionic crosslinking between polymers in the after-mentioned slurry for porous membrane over time, and to prevent increase of viscosity. Furthermore, it may result in decreasing concern to grow self-discharge due to internal short circuit of the secondary battery, or melt and precipitation in case of charge to improve cycle characteristic and safety of the battery.

A method for removing particulate metal components from the polymer solution or polymer dispersion liquid in the above particulate metal removing process is not particularly limited, and may include, for example, a removing method by filtration using a filter, a removing method by a vibrating screen, a removing method by centrifugation, a removing method by magnetic force, etc. Among these, the removing method by magnetic force is preferable because metal components are intended for removal. The removing method by magnetic force is not particularly limited as far as the method allows removing metal components, and in view of productivity and removal efficiency, the removing process can preferably be done by arranging a magnetic filter during the manufacturing line of the polymer particle A and the polymer particle B.

In the present invention, mass ratio of the polymer particle A and the polymer particle B in the porous membrane is preferably 99:1 to 70:30, more preferably 99:1 to 80:20, particularly preferably 99:1 to 85:15. By making the mass ratio of the polymer particle A and the polymer particle B in the porous membrane be within the above range, it is possible to bind the polymer particle A to the polymer particle B, resulting in maintaining the porosity.

In the present invention, content ratio of the polymer particle A and the polymer particle B in the porous membrane is preferably 90 mass% to 5 mass%, more preferably 80 mass% to 10 mass%. By making the content ratio of the polymer particle A and the polymer particle B in the porous membrane be within the above range, sufficient porosity can be obtained, which does not block the conduction path of the lithium-ion, so that the internal resistance cannot be increased.

The porous membrane of the present invention may further include nonconductive particles in addition to the polymer particle A and the polymer particle B within the range not to impair the effects of the present invention. Among the nonconductive particles, those having a melting point of 160°C or more are preferable. By making the porous membrane of the present invention further include nonconductive particles having a melting point of 160°C or more, it is possible to prevent short circuit by having contact with the positive electrode and the negative electrode even when the separator or the porous membrane layer is melted at high temperature.

The nonconductive particles are desired to be stably present under usage environment of a lithium-ion secondary battery, a nickel-hydrogen secondary battery and the like, and also to be electrochemically stable. For example, a variety of inorganic particles and organic fibrous substances can be used.

As the inorganic particles, aluminum oxide, boehmite, oxide particle such as iron oxide, silicone oxide, magnesium oxide, titanium oxide, $BaTiO_2$, ZrO and alumina-silica composite oxide; nitride particle such as aluminum nitride, silicone nitride and boron nitride; covalent crystal particle such as silicone and diamond; poorly-soluble ion crystal particle such as barium sulfate, calcium fluoride and barium fluoride; clay microparticle such as talc and montmorillonite; particle consisting of mineral resource-derived substance or manmade substance thereof such as boehmite, zeolite, apatite, kaolin, mullite, spinel, olivine, sericite and bentonite can be used. These particles may be subjected to elemental substitution, surface treatment and solid solution formation if necessary, and may be used alone or in combination of two or more. Among these, oxide particle is preferable in view of stability in the electrolytic solution and potential stability.

The organic fibrous substance is not particularly limited as far as the substance does not substantially become deformed at 160°C or less, has electrical insulation, is electrochemically stable and is further stable in the later-detailed electrolytic solution, a solvent used for liquid composition, etc. Note that the "fibrous substance" in the present invention indicates those having an aspect ratio ([long-direction length] / [width (diameter) in a direction perpendicular to long direction]) of 4 or more.

For a specific constitutional material of the organic fibrous substance, for example, there may be mentioned resin including cellulose, modified cellulose (such as carboxymethyl cellulose), polypropylene, polyester (such as polyethylene terephthalate, polyethylene naphthalate and polybutylene terephthalate), polyphenylene sulfide, polyaramid, polyamide-imide, polyimide, etc. Among these, polyphenylene sulfide, polyaramid, polyamide imide and polyimide are preferable in view of stability in the electrolytic solution and potential stability.

The organic fibrous substance may include one of these constitutional materials, or two or more of these materials. Also, as constitutional components the organic fibrous substance may include, if necessary, publicly-known various additives in addition to the above constitutional material (e.g., an antioxidizing agent in case of resin).

The shape of the nonconductive particles may be, for example, approximately so-called spherical, or may be plate-like or needle-shaped. More preferably, the particle is plate-like. When the nonconductive particles are plate-like, it can be expected to further improve an effect for preventing short circuit caused by lithium dendrite.

For the form of the nonconductive particles, aspect ratio is preferably 5 or more, more preferably 5 or more to 1000 or less, further preferably 7 or more to 800 or less, particularly preferably 9 or more to 600 or less. Also, when the nonconductive particles are plate-like, it is desirable that an average value of the ratio of a long axis direction length and a short axis direction length in the plate surface is 0.3 or more, more preferably 0.5 or more, 3 or more, more preferably 2 or less. By using the nonconductive particles having an aspect ratio of within the above range, it is possible to form a porous membrane layer in which particles are uniformly oriented and have high in puncture strength in perpendicular direction.

The aspect ratio can be obtained by obtaining [(aspect ratio) = (long-direction length) / (width perpendicular to long-direction) (diameter)] from an image shot by SEM and calculating as an average value of 10 particles.

Also, it is possible to use by surface treatment by a non-electroconductive substance for the surface of fine powder of conductive metal, and compound and oxide having conductive property, such as carbon black, graphite, $SnO_2$, ITO and metal powder, so as to have electrical insulation. The non-electroconductive particle may be used in combination of two or more.

As the nonconductive particle, it is preferable to use those in which a content of a metallic foreign substance is 100 ppm or less. When the nonconductive particle containing large amounts of metallic foreign substance or a metal ion is used, in the after-mentioned slurry for porous membrane, the metallic foreign substance or metal ion may be eluted to cause to ionically crosslink with a polymer in the slurry for porous membrane, and a slurry for porous membrane may be agglutinated, which results in reducing porosity of the porous membrane to deteriorate output characteristics. As the above metal, it is particularly the least preferable to include Fe, Ni and Cr which is easily be ionized. Therefore, the metal content in the nonconductive particle is preferably 100 ppm or less, further preferably 50 ppm or less. The smaller the above content is, the less likely battery properties are deteriorated. The "metallic foreign substance" here indicates single metallic body other than the nonconductive particle. Content of the metallic foreign substance in the nonconductive particle can be measured by ICP (Inductively Coupled Plasma).

Average particle diameter of the nonconductive particle (D50 average particle diameter of volume average) is preferably 5 nm or more to 10 $\mu$m or less, more preferably 10 nm or more to 5 $\mu$m or less. By making the average particle diameter of the nonconductive particle within the above range, it is easier to control the dispersion state and to obtain a membrane having a predetermined uniform thickness. When the average particle diameter of the nonconductive particle is in the range of 50 nm or more to 2 $\mu$m or less, it is particularly preferable because of good dispersion, ease of application, and excellent controlling property for void.

Also specifically, BET specific surface area of the particle is preferably 0.9 to 200 m$^2$/g, more preferably 1.5 to 150 m$^2$/g, in view of controlling agglutination of the particles and optimizing fluidity of the after-mentioned slurry for porous membrane.

Content of the nonconductive particle in the porous membrane is preferably 5 mass% or more to 95 mass% or less, more preferably 20 mass% or more to 90 mass% or less. By making the content of the nonconductive particle in the porous membrane within the above range, it is possible to obtain a porous membrane showing high thermal stability and strength.

The porous membrane may further include other components such as dispersant, leveling agent, antioxidizing agent, binder for porous membrane, thickener, additive for electrolytic solution having functions to inhibit degrading, etc. in addition to the above components. These are not particularly limited as far as these have little influence to battery reaction.

As the dispersant, there may be exemplified an anionic compound, cationic compound, non-ionic compound and high-molecular compound. The dispersant can be selected depending on the nonconductive particle used. Content ratio of the dispersant in the porous membrane is preferably within the range not to affect the battery properties, and is specifically 10 mass% or less.

As the leveling agent, there may be mentioned surfactants such as alkyl surfactant, silicone-based surfactant, fluorine-based surfactant and metallic surfactant. By mixing the surfactant, it is possible to prevent eye hole caused in coating process, and to improve flatness of the electrode.

As the antioxidizing agent, there may be mentioned phenol compound, hydroquinone compound, organic phosphorus compound, sulfur compound, phenylene diamine compound, polymer-type phenol compound, etc. The polymer-type phenol compound is a polymer having a phenol structure within the molecule, and the polymer-type phenol compound having a weight average molecular weight of 200 to 1000, preferably 600 to 700, is used.

As the binder for porous membrane, polytetrafluoro ethylene (PTFE), polyvinylidene fluoride (PVDF), polyacrylic acid derivatives, polyacrylonitril derivatives, soft polymer and the like used for the after-mentioned binder for electrode material mixture layer can be used.

As the thickener, there may be mentioned cellulose-based polymer, such as carboxymethyl cellulose, methyl cellulose and hydroxy propyl cellulose, and ammonium salt and alkali metal salt thereof; (denatured) poly(meth)acrylic acid, and ammonium salt and alkali metal salt thereof; polyvinyl lalcohols such as (denatured) polyvinyl alcohol, copolymer of acrylic acid or acrylate with vinyl alcohol, copolymer of anhydride maleic acid or maleic acid or fumaric acid with vinyl alcohol; polyethylene glycol, polyethylene oxide, polyvinyl pyrrolidone, denatured polyacrylic acid, oxidized starch, starch phosphate, casein, a variety of denatured starches, hydride of acrylonitril butadiene copolymer, etc. When the amount used of the thickener is within the range, coating property and adhesiveness with the electrode material mixture layer and the organic separator is good. In the present invention, "(denatured) poly" means "native poly" or "denatured poly" and "(meth)acrylic" means "acrylic" or "methacrylic".

For the additive for electrolytic solution, vinylene carbonate used in the after-mentioned electrode material mixture layer slurry and the electrolytic solution can be used. In addition, there may be mentioned nanoparticle such as fumed silica and fumed alumina, surfactant such as alkyl surfactant, silicone-based surfactant, fluorine-based surfactant and metallic surfactant, etc. By mixing the above nanoparticle, it is possible to control thixotropy of porous membrane forming slurry, and furthermore, it is possible to improve leveling property of the porous membrane obtained by the slurry.

Content ratio of the other components in the porous membrane is preferably within the range not affecting the battery properties, and specifically 10 mass% or less for each component and 20 mass% or less for the total content ratio of the other components.

(Method for Manufacturing Porous Membrane)

As a method for manufacturing the porous membrane of the present invention, there may be mentioned 1) a method in which the slurry for porous membrane including the polymer particle A, the polymer particle B and a solvent is applied to a predetermined base material, followed by drying; 2) a method in which a base material is immersed in the slurry for porous membrane including the polymer particle A, the polymer particle B and a solvent, followed by drying; and 3) the slurry for porous membrane including the polymer particle A, the polymer particle B and a solvent is applied onto a release film, followed by drying, and the obtained porous membrane is transferred to a predetermined base material. Among these, the method 1) in which the slurry for porous membrane including the polymer particle A, the polymer particle B and a solvent is applied to a base material, followed by drying is the most preferable because the membrane thickness of the porous membrane can easily be controlled.

The method for manufacturing the porous membrane of the present invention is characterized by applying the above slurry for porous membrane to a base material, followed by drying.

(Porous Membrane Slurry)

The slurry for porous membrane of the present invention comprises the polymer particle A, the polymer particle B and a solvent. For the polymer particle A and the polymer particle B, those explained in the above porous membrane are used.

The solvent is not particularly limited as far as the solvent is able to uniformly disperse the above solid contents (the polymer particle A, the polymer particle B and the other components).

As the solvent used for the slurry for porous membrane, either water or organic solvent can be used. The organic solvent may include cyclic aliphatic hydrocarbons such as cyclopentane and cyclohexane; aromatic hydrocarbons such as toluene, xylene and ethyl benzene; ketones such as acetone, ethyl methyl ketone, diisopropyl ketone, cyclohexanone, methyl cyclohexane and ethyl cyclohexane; chlorine-based aliphatic hydrocarbons such as methylene chloride, chloroform and carbon tetrachloride; esters such as ethyl acetate, butyl acetate, γ-butyrolactone and ε-caprolactone; acrylonitriles such as acetonitrile and propionitrile; ethers such as tetrahydrofuran and ethylene glycol diethyl ether; alcohols such as methanol, ethanol, isopropanol, ethylene glycol and ethylene glycol monomethyl ether; amides such as N-methyl pyrrolidone and N,N-dimethyl formamide.

These solvents may be used alone or as mixed solvent obtained by mixing two or more solvents. Among these, water is particularly preferable because of low solubility of the polymers.

Solid content concentration of the slurry for porous membrane is not particularly limited as far as the slurry shows viscosity being sufficient for apply and immersing and having fluidity, and is generally 10 to 50 mass% or so.

Also, the slurry for porous membrane may further include other components such as nonconductive particle, dispersant, additive for electrolytic solution having functions to inhibit degradation of electrolytic solution in addition to the polymer particle A, the polymer particle B and the solvent. These are not particularly limited as far as these do not affect battery reaction.

(Method for Preparing Porous Membrane Slurry)

A method for preparing the slurry for porous membrane is not particularly limited, and the slurry can be obtained by mixing the above polymer particle A, polymer particle B, and solvent in addition to other components added if appropriate.

In the present invention, the use of the above components can result in obtaining a slurry for porous membrane in which the polymer particle A and the polymer particle B are highly dispersed despite a mixing method or mixed order. A mixing machine is not particularly limited as far as it is able to uniformly mix the above components, and ball mill, sand mill, pigment disperser, stone mill, ultrasonic disperser, homogenizer, planetary mixer and the like can be used. Among these, it is particularly preferable to use a high-performance disperser such as bead mill, roll mill and FILMIX, able to add high dispersing share.

Viscosity of the slurry for porous membrane is preferably 10 mPa·s to 10,000 mPa·s, further preferably 50 to 500 mPa·s in view of uniform coating property and stability of the slurry over time. The above viscosity is a value measured at 25°C with rotation number of 60 rpm using a Type B viscosity meter.

In the method for manufacturing the porous membrane of the present invention, the base material is not particularly limited, but it is preferable to form the porous membrane of the present invention particularly on an electrode for a secondary battery or an organic separator. Among these, it is more preferable to form particularly on an electrode surface for a secondary battery. By forming the porous membrane of the present invention on the electrode surface, short circuit between the positive electrode and the negative electrode may not be caused and high safety can be maintained even when an organic separator is contracted by heat. In addition, by forming the porous membrane of the present invention on the electrode surface, the porous membrane can work as a separator even without the organic separator, so that it is possible to produce a battery at low cost. Also, even when the organic separator is used, it is possible to show higher output characteristics without filling in pores formed on the surface of the organic separator.

In the method for manufacturing the porous membrane of the present invention, the membrane may be formed on a base material other than the electrode and organic separator. In case that the porous membrane of the present invention is formed on a base material other than the electrode and organic separator, the porous membrane can be used by stacking on the electrode or the organic separator when removing from the base material to directly assembly a battery.

A method for coating the slurry for porous membrane on the base material is not particularly limited. For example, there may be mentioned doctor blade method, dip method, reverse roll method, direct roll method, gravure method, extrusion method, brush method, etc. Among these, dip method and gravure method are preferable because the uniform porous membrane can be obtained.

A drying method may include, for example, drying by warm air, hot air or low wet air, vacuum drying, drying method with irradiation of (far-)infrared rays, electron beam and the like. The drying temperature can be varied depending on the kind of the solvent used. In order to completely remove the solvent, it is preferable to dry at high temperature of 120°C or more using a blast drying machine when a low-volatile solvent such as N-methyl pyrrolidone, for example. In contrast, it is possible to dry at low temperature of 100°C or less when a highly-volatile solvent is used. When the porous membrane is formed on the after-mentioned organic separator, it is necessary to dry without causing contraction of the organic separator, drying at low temperature of 100°C or less is preferable.

Then, if necessary, it is possible to improve adhesiveness between the electrode material mixture layer and the porous membrane through pressure treatment by using mold press, roll press and the like. However, it is required to properly control pressure and pressure applying time because excessive pressure treatment may cause to reduce void ratio of the porous membrane.

The thickness of the porous membrane is not particularly limited, and is properly determined depending on intended purpose or applied area of the porous membrane. When it is too thin, uniform membrane cannot be formed; and when it is too thick on the other hand, capacity per volume (mass) in the battery is decreased, so that 0.5 to 50 μm is preferable, and 0.5 to 10 μm is more preferable.

The porous membrane of the present invention is formed on the surface of the electrode material mixture layer of the electrode for a secondary battery or the organic separator, and is particularly preferably used as a protective membrane for the electrode material mixture layer or as a separator. The electrode for a secondary battery where the porous membrane is formed is not particularly limited, and it is possible to form the porous membrane of the present invention onto any electrode varied in constitution. Also, the porous membrane may be formed on either surface of the positive electrode or the negative electrode of the secondary battery, and may be formed on both positive electrode and negative electrode.

(Electrode for Secondary Battery)

The electrode for a secondary battery of the present invention can be obtained by attaching the electrode material mixture layer including binder for an electrode material mixture layer and electrode active material to a collector, and layering the above porous membrane on the surface of the electrode material mixture layer.

(Electrode Active Material)

The electrode active material used for the electrode for a secondary battery of the present invention may be selected depending on the secondary battery where the electrode is used. The above secondary battery may include a lithium-ion secondary battery and a nickel hydrogen secondary battery.

When the electrode for a secondary battery of the present invention is used as a positive electrode of a lithium-ion secondary battery, an electrode active material (positive electrode active material) for a positive electrode of the lithium-ion secondary battery can be classified into those composed of an inorganic compound and those composed of an organic compound.

As the positive electrode active material composed of an inorganic compound, there may be mentioned transition metal oxide, composite oxide of lithium and transition metal, transition metal sulfide, etc. As the above transition metal, Fe, Co, Ni, Mn and the like can be used. Specific examples of the inorganic compound used for the positive electrode active material may include lithium-containing composite metal oxide such as $LiCoO_2$, $LiNiO_2$, $LiMnO_2$, $LiMn_2O_4$, $LiFePO_4$ and $LiFeVO_4$; transition metal sulfide such as $TiS_2$, $TiS_3$ and amorphous $MoS_2$; and transition metal oxide such as $Cu_2V_2O_3$, amorphous $V_2O-P_2O_5$, $MoO_3$, $V_2O_5$ and $V_6O_{13}$. These compounds may partially be subject to elemental substitution. As the positive electrode active material composed of an organic compound, for example, conductive high molecular can be used, such as polyacetylene and poly-p-phenylene. Iron-based oxide having poor electrical conductivity may be used as an electrode active material covered by carbon material by performing reduction firing under the presence of carbon source. Also, these compounds may partially be subject to elemental substitution.

The positive electrode active material for a lithium-ion secondary battery may be mixture of the above inorganic compound and organic compound. The particle diameter of the positive electrode active material can properly be selected in view of other constitutional requirements of the battery, and 50% volume cumulative diameter is normally 0.1 to 50 $\mu$m, preferably 1 to 20 $\mu$m, in view of improvements in battery properties such as output characteristics and cycle characteristics. When the 50% volume cumulative diameter is within the range, it is possible to obtain a secondary battery having large discharge and charge capacity, and also, it can be easy to handle when producing electrode slurry and electrode. The 50% volume cumulative diameter can be obtained by measuring particle size distribution with laser diffraction.

When the electrode for a secondary battery of the present invention is used for a negative electrode of a lithium-ion secondary battery, there may be mentioned, for example, carbonaceous material such as amorphous carbon, graphite, natural graphite, mesocarbon microbead and carbon pitch fiber, conductive high-molecular such as polyacene as an electrode active material for a negative electrode of a lithium-ion secondary battery (negative electrode active material). Also, silicone, metal such as tin, zinc, manganese, iron and nickel, and alloys thereof, oxide and sulfate of the above metal or alloy can be used as the negative electrode active material. In addition, metal lithium, Li-Al, lithium alloy such as Li-Bi-Cd and Li-Sn-Cd, lithium transition metal nitride, silicone and the like can be used. The electrode active material in which a conductivity providing agent is attached onto its surface by mechanical reforming method can be used as well. The particle diameter of the negative electrode active material can properly be selected in view of other requirements of the battery, and 50% volume cumulative diameter is normally 1 to 50 $\mu$m, preferably 15 to 30 $\mu$m, in view of improvements in battery properties such as primary efficiency, output characteristics and cycle characteristics.

When the electrode for a secondary battery of the present invention is used for a positive electrode of a nickel hydrogen secondary battery, there may be mentioned hydroxide nickel particle as an electrode active material for a positive electrode of a nickel hydrogen secondary battery (positive electrode active material). The hydroxide nickel particle may be solid-solution with cobalt, zinc, cadmium and the like, or alternatively, its surface may be coated by a cobalt compound thermally treated by alkaline. Also, the hydroxide nickel particle may include an additive including cobalt compound such as cobalt oxide, metal cobalt and cobalt hydroxide, zinc compound such as metal zinc, zinc oxide and zinc hydroxide, rare-earth compound such as erbium oxide in addition to yttrium oxide.

When the electrode for a secondary battery of the present invention is used for a negative electrode of a nickel hydrogen secondary battery, a hydrogen storing alloy particle as an electrode active material for a negative electrode of a nickel hydrogen secondary battery (negative electrode active material) may be any of those able to store hydrogen electrochemically generated in an alkaline electrolytic solution in case of battery charge and to easily release the stored hydrogen at the time of discharge and is not particularly limited, but is preferably particle of AB5 type, TiNi-based and TiFe-based hydrogen storing alloy. Specifically, for example, $LaNi_5$, $MmNi_5$ (Mm indicates misch metal), $LmNi_5$ (Lm indicates at least one selected from rare-earth elements including La) and multielement hydrogen storing alloy particle obtained by substituting a part of Ni in alloy thereof with one or more elements selected from Al, Mn, Co, Ti, Cu, Zn, Zr, Cr and B can be used. The hydrogen storing alloy particle having a composition expressed by a general formula: Lm $Ni_w$ $Co_x$ $Mn_y$ $Al_z$ (the total of atom ratios w, x, y and z is in the following range: $4.80 \leq w+x+y+z \leq 5.40$) is particularly preferable because of improvement in discharge and charge cycle life by inhibiting particle size reduction with progression of discharge and charge cycle.

(Binder for Electrode Material Mixture Layer)

In the present invention, the electrode material mixture layer includes binder for an electrode material mixture layer in addition to the electrode active material. By including the electrode binder, binding property of the electrode material mixture layer in the electrode can be improved, strength to mechanical force applied during winding process of the electrode and the like can be increased, and also, risks of short circuit and the like caused by such removed layer can be reduced because the electrode material mixture layer in the electrode is hardly removable.

Various resin components can be used as the binder for an electrode material mixture layer. For example, it is possible to use polyethylene, polytetrafluoro ethylene (PTFE), polyvinylidene fluoride (PVDF), tetrafluoroethylene hexafluoropropylene copolymer (FEP), polyacrylic acid derivatives, polyacrylonitril derivatives, etc. These may be used alone or in combination of two or more.

Further, the following examples of soft polymers can be used as the binder for an electrode material mixture layer.

There may be mentioned acrylic soft polymer which is a homopolymer of acrylic acid or methacrylic acid derivative, or a copolymer of monomer copolymerizable therewith such as polybutyl acrylate, polybutyl methacrylate, polyhydroxy ethyl methacrylate, polyacrylic amide, polyacrylonitril, butyl acrylate-styrene copolymer, butyl acrylate-acrylonitril copolymer and butyl acrylate-acrylonitril-glycidyl methacrylate copolymer;

isobutylene-based soft polymer such as polyisobutylene, isobutylene-isoprene rubber and isobutylene-styrene copolymer;

diene-based soft polymer such as polybutadiene, polyisoprene, butadiene-styrene random copolymer, isoprene-styrene random copolymer, acrylonitrile-butadiene copolymer, acrylonitrile-butadiene-styrene copolymer, butadiene-styrene-block copolymer, styrene-butadiene-styrene-block copolymer, isoprene-styrene-block copolymer and styrene-isoprene-styrene-block copolymer; silicone containing soft polymer such as dimethyl polysiloxane, diphenyl polysiloxane and dihydroxy polysiloxane;

olefin-based soft polymer such as liquid polyethylene, polypropylene, poly-1-butene, ethylene-$\alpha$-olefin copolymer, propylene-$\alpha$-olefin copolymer, ethylene-propylene-diene copolymer (EPDM) and ethylene-propylene-styrene copolymer;

vinyl-based soft polymer such as polyvinyl alcohol, polyvinyl acetate, poly vinyl stearate and vinyl acetate-styrene copolymer;

epoxide-based soft polymer such as polyethylene oxide, polypropylene oxide and epichlorohydrin rubber;

fluorine containing soft polymer such as vinylidene fluoride rubber and ethylene propylene tetrafluoride rubber; and

other soft polymers including natural rubber, polypeptide, protein, polyester-based thermoplastic elastomer, vinyl chloride-based thermoplastic elastomer and polyamide-based thermoplastic elastomer. These soft polymers may have a cross-linked structure, and also, a functional group may be introduced therein by denaturalization.

Amount of the binder for an electrode material mixture layer in the electrode material mixture layer is preferably 0.1 to 5 parts by mass, more preferably 0.2 to 4 parts by mass, particularly preferably 0.5 to 3 parts by mass, per 100 parts by mass of the electrode active material. When the amount of the binder for an electrode material mixture layer is in the above range, it is possible to prevent an active material from dropping from the electrode without inhibiting battery reaction.

The binder for an electrode material mixture layer can be prepared as a solution or dispersion liquid for producing an electrode. The viscosity is normally within the range of 1 mPa·s to 300,000 mPa·s, preferably 50 mPa·s to 10,000 mPa·s. The above viscosity can be obtained by measuring at 25°C with rotation number of 60 rpm using a Type B viscosity meter.

In the present invention, the electrode material mixture layer may include a conductivity providing agent and reinforcing material. The conductivity providing agent may include conductive carbon such as acetylene black, Ketjen black, carbon black, graphite, vapor-phase carbon fiber and carbon nanotube. There may also be carbon powder such as black lead, fiber and foil of a variety of metals, etc. As the reinforcing material, a variety of inorganic and organic spherical, plate-like, rod-like or fibrous form filler can be used. By using a conductivity providing agent, it is possible to improve electrical interengagement between electrode active materials, and particularly when it is used in a lithium-ion secondary battery, discharge power can be improved. Amounts of the conductivity providing agent and reinforcing material are normally 0 to 20 parts by mass, preferably 1 to 10 parts by mass, per 100 parts by mass of the electrode active material.

The electrode material mixture layer can be formed by attaching a slurry including the binder for an electrode material mixture layer, the electrode active material and the solvent (hereinafter may also be referred to as "electrode material mixture layer forming slurry") to the collector.

The solvent may be any able to melt or disperse to particulate the above binder for an electrode material mixture layer, and is preferably those able to melt. When using the solvent able to melt the binder for an electrode material mixture layer, dispersion of the electrode active material and the like can be stabilized by adsorbing the binder for an electrode material mixture layer on the surface thereof.

As the solvent for the electrode material mixture layer forming slurry, either water or organic solvent can be used. The organic solvent may include cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, $\gamma$-butyrolactone and $\varepsilon$-caprolactone; nitriles such as acetonitrile and propionitrile; ethers such as tetrahydrofuran and ethylene glycol diethyl ether; alcohols such as methanol, ethanol, isopropanol, ethylene glycol and ethylene glycol monomethyl ether; amides such as N-methyl pyrrolidone and N,N-dimethyl formamide. These solvents may be used alone, or as a mixture of two or more by properly selecting in view of drying rate and environmental aspect.

The electrode material mixture layer forming slurry may include a thickener. A polymer soluble in the solvent used for the electrode material mixture layer forming slurry can be used. As the thickener here, it is possible to use the thickener exemplified in the porous membrane of the present invention. Amount of the thickener is preferably 0.5 to 1.5 parts by mass per 100 parts by mass of the electrode active material. When the amount of the thickener is within the range, coating property and adhesiveness to the collector are good.

The electrode material mixture layer forming slurry further includes trifluoropropylene carbonate, vinylene carbonate, catechol carbonate, 1,6-dioxa spiro[4,4]nonane-2,7-dione, 12-crown-4-ether, etc. in addition to the above components for increasing stability and life of the battery. Also, these may be used by including the same in the after-mentioned electrolytic solution.

Amount of the solvent in the electrode material mixture layer forming slurry can be adjusted to have preferable viscosity at the time of coating depending on the kind of the electrode active material, the binder for an electrode material mixture layer and the like. Specifically, the concentration of the combined solid contents of the electrode active material, the binder for an electrode material mixture layer and other additives such as conductivity providing agent in the electrode material mixture layer forming slurry is adjusted to preferably 30 to 90 mass%, more preferably 40 to 80 mass%.

The electrode material mixture layer forming slurry can be obtained by mixing the electrode active material, the binder for an electrode material mixture layer, the other additive added if necessary such as conductivity providing agent, and the solvent by using a mixing machine. The above respective components may collectively be provided to the mixing machine and mixed. When the electrode active material, the binder for an electrode material mixture layer, the conductivity providing agent and the thickener are used as structural components of the electrode material mixture layer forming slurry, it is preferable to mix the conductivity providing agent and the thickener in the solvent to disperse the conductivity providing agent into microparticle, followed by adding the binder for an electrode material mixture layer and the electrode active material and further mixing, because dispersibility of the obtained slurry can be improved. As the mixing machine, ball mill, sand mill, pigment disperser, stone mill, ultrasonic disperser, homogenizer, planetary mixer, Hobart mixer and the like can be used, and it is preferable to use ball mill because agglutination of the conductivity providing agent and electrode active material can be inhibited.

The particle size of the electrode material mixture layer forming slurry is preferably 35 $\mu$m or less, further preferably 25 $\mu$m or less. When the particle size of the slurry is within the above range, dispersibility of the conductive material can be high, and a uniform electrode can be obtained.

The collector is not particularly limited as far as it is electrically conductive and electrochemically durable, and for example, metallic material such as iron, copper, aluminum, nickel, stainless steel, titanium, tantalum, gold and platinum are preferable in view of exhibiting heat-resistance. Among these, aluminum is particularly preferable for a positive electrode of a lithium-ion secondary battery, and copper is particularly preferable for a negative electrode of a lithium-ion secondary battery. The shape of the collector is not particularly limited, and is preferably sheet-like having a thickness of 0.001 to 0.5 mm or so. The collector is preferably used after preliminary roughening for increasing adhering strength of the electrode material mixture layer. As a roughening method, there may be mentioned mechanical method of polishing, electropolishing, chemical polishing, etc. In the mechanical method of polishing, coated abrasive with adhering abrasive particles, grinding stone, emery buff, wire-brush provided with steel wire, etc. can be used. Also, for increasing the adhering strength and conductivity of the electrode material mixture layer, an intermediate layer may be formed on the surface of the collector.

A method for producing the electrode material mixture layer may be any method in which the electrode material mixture layer is bound to form layers to at least one surface of the above collector, preferably both surfaces. For example, the electrode material mixture layer can be formed by applying the above electrode material mixture layer forming slurry onto the collector and drying the same, followed by heating treatment at 120°C or more for 1 hour or more. The method of coating the electrode material mixture layer forming slurry to the collector is not particularly limited. For example, there may be mentioned doctor blade method, dip method, reverse roll method, direct roll method, gravure method, extrusion method, brush method, etc. For the drying method, for example, there may be mentioned drying by warm air, hot air or low wet air, vacuum drying, drying method with irradiation of (far-)infrared rays, electron beam and the like.

Then, it is preferable to lower void ratio of the electrode material mixture layer of the electrode by pressure treatment with mold press, roll press and the like. The preferable range of the void ratio is 5% to 15%, more preferably 7% to 13%. Too high void ratio may cause to deteriorate charge efficiency and discharge efficiency. Too low void ratio may cause problems such that high volume capacity can hardly be obtained, and that the electrode material mixture layer can easily be peeled off to cause defect. Furthermore, when using a curable polymer, it is preferable to cure the polymer.

The thickness of the electrode material mixture layer is normally 5 to 300 $\mu$m, preferably 10 to 250 $\mu$m, for both positive electrode and negative electrode.

(Separator for Secondary Battery)

The separator for a secondary battery of the present invention can be obtained by layering the above porous membrane on an organic separator.

As the organic separator, publicly-known separators including polyolefin resin such as polyethylene and polypropylene, aromatic polyamide resin and the like can be used.

For the organic separator used in the present invention, porous membrane which lacks electron conductivity, has ion conductivity, is highly resistant to the organic solvent and has fine pore diameter can be used, and for example, there may be mentioned microporous membrane made of resin such as polyolefin (polyethylene, polypropylene, polybutene, polyvinyl chloride), and mixture or copolymer thereof, microporous made of resin such as polyethylene terephthalate, polycycloolefin, polyethersulfone, polyamide, polyimide, polyimide amide, polyaramid, nylon and polytetrafluoro ethylene, or woven material of polyolefin fiber, or nonwoven cloth, aggregate of insulating particles, etc. Among these, microporous membrane made of polyolefin resin is preferable because coating property of the slurry for porous membrane is good to reduce the thickness of the whole separator, to increase a rate of the active material in the battery and to increase capacity per volume.

The thickness of the organic separator is normally 0.5 to 40 $\mu$m, preferably 1 to 30 $\mu$m, further preferably 1 to 10 $\mu$m. Within the above range, resistance due to the separator can be decreased in the battery, and workability at the time of coating to the organic separator is good.

In the present invention, the polyolefin resin used as a material of the organic separator may include homopolymer and copolymer of polyethylene, polypropylene and the like, mixture thereof, etc. As the polyethylene, there may be mentioned low-density, medium density and high-density polyethylene, and high-density polyethylene is preferable in view of sticking strength and mechanical strength. Also, two or more polyethylene may be mixed for the purpose of giving flexibility. A polymerization catalyst used for the polyethylene is not particularly limited, and may include Ziegler-Natta catalyst, Phillips catalyst, metallocene catalyst, etc. The viscosity average molecular weight of the polyethylene is preferably 100,000 or more to 12,000,000 or less, more preferably 200,000 or more to 3,000,000 or less in view of balancing mechanical strength with high permeability. As the polypropylene, there may be mentioned homopolymer, random copolymer and block copolymer, and these may be used alone, or two or more may be mixed to use. Also, a polymerization catalyst is not particularly limited, and may include Ziegler-Natta catalyst, metallocene catalyst, etc. Also, tacticity is not particularly limited, and isotactic, syndiotactic or atactic polypropylene can be used, but it is desired to use isotactic polypropylene in view of inexpensive price. The polyolefin may further be added with an appropriate amount of polyethylene or polyolefin other than polypropylene, and an additive such as antioxidizing agent and nucleating agent within the range not affecting the effects of the present invention.

As a method for preparing polyolefin-based organic separator, any publicly-known and used can be used, and for example, the following methods can be selected: a dry method in which polypropylene or polyethylene is melted and extruded to form film, followed by annealing at a low temperature to allow crystal domain to grow, and a microporous membrane is formed by stretching the same to stretch amorphous domain; a wet method in which polypropylene or polyethylene is mixed with a hydrocarbon solvent and other low molecular materials, followed by forming film, and then, a microporous membrane is formed by removing the solvent and low molecules from the obtained film where the solvent and low molecules gather around amorphous phase to form an island phase by using another easily volatized solvent; etc. Among these, the dry method is preferable because large void is easily obtained for reducing resistance.

The organic separator used in the present invention may include other filler and fibrous compound for the purpose of controlling strength, hardness and heat contraction rate. Also, when the above porous membrane is layered, the organic separator may preliminarily be coated by low-molecular compound or high-molecular compound, or be subject to treatment by electromagnetic rays such as ultraviolet rays, corona discharge treatment / plasma-treatment by plasma gas for the purpose of improving adhesiveness, and improving impregnation of the electrolytic solution by reducing surface tension. Particularly, it is preferable to coat with high-molecular compound containing a polar group such as carboxylic acid group, hydroxyl group and sulfonic acid group because impregnation of the electrolytic solution is high and adhesiveness with the above porous membrane is easily obtainable.

(Secondary Battery)

A secondary battery of the present invention comprises a positive electrode, a negative electrode, a separator and an electrolytic solution, in which the above porous membrane is layered on at least any of the positive electrode, negative electrode and the separator.

For the secondary battery, a lithium-ion secondary battery, a nickel hydrogen secondary battery and the like may be mentioned, and a lithium-ion secondary battery is preferable because improved safety is most required, an effect to introduce the porous membrane is highest and improvement in output characteristics is a problem to be solved. Hereinafter, the use in a lithium-ion secondary battery will be explained.

(Electrolytic Solution)

As an electrolytic solution for a lithium-ion secondary battery, organic electrolytic solution in which supporting electrolyte is melted in an organic solvent can be used. For the supporting electrolyte, lithium salt can be used. The lithium salt is not particularly limited, and may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$, etc. Among these, $LiPF_6$, $LiClO_4$ and $CF_3SO_3Li$, easily soluble in a solvent and showing high degree of dissociation, are preferable. Two or more of these may be combined to use. The supporting electrolyte with higher degree of dissociation results in higher lithium-ion conductivity, so that it is possible to adjust lithium-ion conductivity by the kind of the supporting electrolyte.

The organic solvent used in the electrolyte solution for a lithium-ion secondary battery is not particularly limited as far as the solvent is able to melt the supporting electrolyte. Carbonates such as dimethyl carbonate (DMC), ethylene carbonate (EC), diethyl carbonate (DEC), propylene carbonate (PC), butylene carbonate (BC) and methyl ethyl carbonate (MEC); esters such as $\gamma$-butyrolactone and methyl formate; ethers such as 1,2-dimethoxyethane and tetrahydrofuran; sulfur-containing compounds such as sulfolane and dimethyl sulfoxide are preferably used. Also, the mixture of these solvents may be used. Among these, carbonates are preferable because of high permittivity and broad stable potential range. The solvent having lower viscosity results in higher lithium-ion conductivity, so that it is possible to adjust lithium-ion conductivity by the kind of the solvent.

Also, the above electrolytic solution can include an additive. As the additive, there may be mentioned carbonate compounds such as vinylene carbonate (VC) used in the above-mentioned electrode material mixture layer slurry.

The concentration of the supporting electrolyte in the electrolytic solution for a lithium-ion secondary battery is normally 1 to 30 mass%, preferably 5 mass% to 20 mass%. Also, depending on the kind of the supporting electrolyte, it is normally used in a concentration of 0.5 to 2.5 mol/L. When the concentration of the supporting electrolyte is either too low or too high, ion conductivity tends to be lowered. Lower concentration of the electrolytic solution results in increased degree of swelling of the polymer particle, so that it is possible to adjust lithium-ion conductivity by the concentration of the electrolytic solution.

For an electrolytic solution other than the above-mentioned solutions, there may be mentioned polymer electrolyte such as polyethylene oxide and polyacrylonitril, gel-like polymer electrolyte in which the above polymer electrolyte is impregnated with the electrolytic solution, inorganic solid electrolyte such as LiI and $Li_3N$.

As the separator, there may be mentioned organic separator exemplified as the above-mentioned separator for a secondary battery. For a positive electrode and a negative electrode, those obtained by attaching the electrode material mixture layer including binder for an electrode material mixture layer and electrode active material to a collector as exemplified for the above-mentioned electrode for a secondary battery.

In the secondary battery of the present invention, the electrode for a secondary battery may be used as the positive electrode and negative electrode on which the porous membrane is layered, and the separator for a secondary battery may be used as the separator on which the porous membrane is layered.

A specific method for manufacturing a lithium-ion secondary battery, there may be mentioned a method in which the positive electrode and the negative electrode are layered via a separator, which is then winded or bended depending on the battery shape to fit in the battery case, followed by filling the electrolyte solution in the battery case and sealing the case. The porous membrane of the present invention may be formed on any of the positive electrode, the negative electrode and the separator. Also, only the porous membrane can be layered independently. Also, as needed, it is possible to prevent pressure increase inside the battery and overcharge-overdischarge by setting in expanded metal, overcurrent protection element such as fuse and PTC element, and lead plate, etc. The shape of the battery may include coin shape, button shape, sheet shape, cylinder shape, square shape and flattened shape.

EXAMPLES

Hereinafter, the present invention will be explained based on examples, but the present invention is not limited to these examples. Note that "part" and % are based on mass in the present examples unless otherwise stated.

A variety of physical properties in the following examples and comparative examples are evaluated as follows.

<Battery Properties: Output Characteristics>

The obtained coin shaped lithium-ion secondary battery was charged to 4.3V at 25°C by a constant current method of 0.1C, and then discharged to 3.0V at 0.1C to obtain 0.1C-discharge capacity. Then, the battery was charged to 4.3V at 0.1C, followed by discharging to 3.0V at 5C, 10C and 20C to obtain 5C, 10C and 20C discharge capacities. These measurements were done for 10 coin shaped full cell batteries, and an average value of each measurement was defined as 0.1C discharge capacity "a" as 5C, 10C and 20C discharge capacities "b". The capacity retention rate was obtained as a rate of electrical capacities expressed by 5C, 10C and 20C discharge capacities "b" and 0.1C discharge capacity "a" (b/a (%)), which was determined as an evaluative criterion for output characteristics and evaluated according to the following standard. Higher value indicates more excellent output characteristics.
SA: 60% or more
A: 50% or more to less than 60%
B: 30% or more to less than 50%
C: 10% or more to less than 30%
D: 1% or more to less than 10%
E: less than 1%

<Battery Properties: Cycle Characteristics>

The obtained coin shaped lithium-ion secondary battery was subject to 100 cycles of discharge and charge in which the battery was charged from 3V to 4.3V at 0.1C respectively at 25°C and 60°C, and then discharged from 4.3V to 3V at 0.1C. A rate of 0.1C discharge capacity of the hundredth cycle to 0.1C discharge capacity of the fifth cycle was calculated on percentage, which was defined as a capacity maintenance rate to be evaluated according to the following standard. Larger value indicates smaller decrease in discharge capacity and more excellent long-term cycle characteristics.
SA: 80% or more
A: 70% or more to less than 80%
B: 60% or more to less than 70%
C: 50% or more to less than 60%
D: 40% or more to less than 50%
E: 30% or more to less than 40%
F: less than 30%

(Example 1)

The polystyrene particle (PP-30-10 by Spherotech) having a number average particle diameter of 3 $\mu$m and a glass-transition temperature of 100°C was used as a polymer particle A-1,

<Production of Polymer Particle B-1>

12 parts of n-butyl acrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 88 parts of n-butyl acrylate, 0.9 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-1 was obtained. The obtained polymer particle B-1 had a glass-transition temperature of -55°C, and a number average particle diameter was 0.1 $\mu$m. Also, crystallinity of the polymer particle B-1 was 40% or less, and its main chain structure was saturated structure.

<Preparation of Porous Membrane Slurry>

The water dispersions of the polymer particle A and the water dispersions of the polymer particle B were mixed to have a mass ratio of the polymer particle A-1 and the polymer particle B-1 (based on solid content) of the ration shown in Table 1, i.e. 97:3, to obtain a slurry for porous membrane having a solid content concentration of 13%.

<Production of Electrode Composition for Negative Electrode and Negative Electrode>

98 parts of graphite having a particle diameter of 20 $\mu$m and specific surface area of 4.2m$^2$/g as the negative electrode active material and 5 parts of PVDF (polyvinylidene fluoride) in terms of solid content as the binder for an electrode material mixture layer were mixed, and further added with N-methyl pyrrolidone followed by mixing by planetary mixer to prepare an electrode composition for a negative electrode in slurry-state (negative electrode material mixture layer forming slurry). The electrode composition for a negative electrode was applied on one side of copper foil having a thickness of 10 $\mu$m, and dried at 110°C for 3 hours, followed by roll press to obtain a negative electrode having a negative electrode material mixture layer with a thickness of 60 $\mu$m.

<Production of Electrode Composition for Positive Electrode and Positive Electrode>

92 parts of lithium manganate having a spinel structure as the positive electrode active material, 5 parts of acetylene black, and 3 parts of PVDF (polyvinylidene fluoride) in terms of solid content as the binder for an electrode material mixture layer were added, and then, its solid content concentration was adjusted to 87% with NMP, followed by mixing by planetary mixer for 60 minutes. After further adjusting its solid content concentration to 84% with NMP, it was mixed for 10 minutes to prepare an electrode composition for a positive electrode in slurry-state (positive electrode material mixture layer forming slurry). The electrode composition for a positive electrode was applied on an aluminum foil having a thickness of 18 $\mu$m, and dried at 120°C for 3 hours, followed by roll press to obtain a positive electrode having a positive electrode material mixture layer with a thickness of 50 $\mu$m.

<Preparation of Negative Electrode with Porous Membrane>

The slurry for porous membrane was coated on the negative electrode material mixture layer of the obtained negative electrode to have a thickness of the porous membrane layer after drying of 5 $\mu$m by using wire bar, and then dried at 90°C for 10 minutes, so that the porous membrane was formed to obtain a negative electrode with porous membrane.

<Preparation of Battery>

Then, the obtained positive electrode, the negative electrode with porous membrane 1 and a single-layered polypropylene separator (porosity of 55%) having a thickness of 25 $\mu$m produced by the dry method were cut into a circular form having a diameter of 13 mm, a diameter of 14 mm and a diameter of 18 mm, respectively. The separator was placed on a side of the positive electrode material mixture layer of the positive electrode, and the negative electrode with porous membrane was arranged via the separator so as to face the electrode material mixture layers each other and to make the aluminum foil of the positive electrode contact with the bottom face of an outer case. Expanded metal was further placed on the copper foil of the negative electrode, and the obtained structure was housed in a stainless steel coin shaped outer case (diameter of 20 mm, height of 1.8 mm and stainless steel thickness of 0.25 mm) where polypropylene packing was put. The electrolytic solution (EC/DEC=1/2, 1M LiPF$_6$) was injected into the case not to leave air, and the outer case was covered with a stainless steel cap having a thickness of 0.2 mm via the polypropylene packing, and fixed, followed by sealing the battery can, so that a coin shaped full cell battery having a diameter of 20 mm and a thickness of about 3.2 mm (coin cell CR2032) was produced. For the obtained battery, output characteristics and cycle characteristics were measured. The results are shown in Table 2.

(Example 2)

Except for using polystyrene particle having a glass-transition temperature of 100°C and a number average particle diameter of 7 $\mu$m (PP-60-10 by Spherotech, hereinafter may be referred to as "polymer particle A-2") as the polymer particle A, the slurry for porous membrane, the electrode with porous membrane and the coin shaped lithium-ion secondary battery were obtained to measure output characteristics and cycle characteristics as in Example 1. The results are shown in Table 2.

(Example 3)

Except for using polystyrene particle having a glass-transition temperature of 100°C and a number average particle diameter of 0.5 $\mu$m (PP-05-10 by Spherotech, hereinafter may be referred to as "polymer particle A-3") as the polymer particle A, the slurry for porous membrane, the electrode with porous membrane and the coin shaped lithium-ion secondary battery were obtained to measure output characteristics and cycle characteristics as in Example 1. The results are shown in Table 2.

(Example 4)

<Production of Polymer Particle B-2>

12 parts of n-butyl acrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 88 parts of n-butyl acrylate, 0.3 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-2 was obtained. The obtained polymer particle B-2 had a glass-transition temperature of -55°C, and a number average particle diameter was 0.3 $\mu$m. Also, crystallinity of the polymer particle B-2 was 40% or less, and its main chain structure was saturated structure.
Except for using the above polymer particle B-2 as the polymer particle B, the slurry for porous membrane, the electrode with porous membrane and the coin shaped lithium-ion secondary battery were obtained to measure output characteristics and cycle characteristics as in Example 1. The results are shown in Table 2.

(Example 5)

<Production of Polymer Particle B-3>

12 parts of n-butyl acrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 88 parts of n-butyl acrylate, 2.7 parts of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-3 was obtained. The obtained polymer particle B-3 had a glass-transition temperature of-55°C, and a number average particle diameter was 0.05 $\mu$m. Also, crystallinity of the polymer particle B-3 was 40% or less, and its main chain structure was saturated structure.
Except for using the above polymer particle B-3 as the polymer particle B, the slurry for porous membrane, the electrode with porous membrane and the coin shaped lithium-ion secondary battery were obtained to measure output characteristics and cycle characteristics as in Example 1. The results are shown in Table 2.

(Example 6) -not falling under the scope of the invention as claimed in the appended claims-

Except for using polymethyl methacrylate particle having a glass-transition temperature of 70°C and a number average particle diameter of 3 $\mu$m (MX-300 by Soken Chemical & Engineering Co., Ltd, hereinafter may be referred to as "polymer particle A-4") as the polymer particle A, the slurry for porous membrane, the electrode with porous membrane and the coin shaped lithium-ion secondary battery were obtained to measure output characteristics and cycle characteristics as in Example 1. The results are shown in Table 2.

(Example 7)

<Production of Polymer Particle B-4>

8 parts of 2-ethyl hexyl acrylate, 4 parts of methyl methacrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 62 parts of 2-ethyl hexyl acrylate, 26 parts of methyl methacrylate, 0.9 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-4 was obtained. The obtained polymer particle B-4 had a glass-transition temperature of 10°C, and a number average particle diameter was 0.1 $\mu$m. Also, crystallinity of the polymer particle B-4 was 40% or less, and its main chain structure was saturated structure.

Except for using the above polymer particle B-4 as the polymer particle B, the slurry for porous membrane, the electrode with porous membrane and the coin shaped lithium-ion secondary battery were obtained to measure output characteristics and cycle characteristics as in Example 1. The results are shown in Table 2.

(Example 8)

Except for changing the mass ratio of the polymer particle A-1 and the polymer particle B-1 to 75: 25, the slurry for porous membrane, the electrode with porous membrane and the coin shaped lithium-ion secondary battery were obtained to measure output characteristics and cycle characteristics as in Example 1. The results are shown in Table 2.

(Example 9)

The obtained slurry for porous membrane in Example 1 was coated on a single-layered polypropylene separator (porosity of 55%) having a width of 65 mm, a length of 500 mm and a thickness of 25 $\mu$m produced by the dry method to have a thickness of the porous membrane layer after drying of 5 $\mu$m by using wire bar, and then dried at 90°C for 10 minutes, so that the porous membrane was formed to obtain a separator with porous membrane.

Except for the above separator with porous membrane as the separator, and using the negative electrode without coating of the porous membrane, the slurry for porous membrane, the separator with porous membrane and the coin shaped lithium-ion secondary battery were obtained to measure output characteristics and cycle characteristics as in Example 1. The results are shown in Table 2.

(Example 10)

In the preparation of the slurry for porous membrane, plate-like boehmite (average particle diameter of 1 $\mu$m and aspect ratio of 10) was added in addition to the water dispersions of the polymer particle A and the water dispersions of the polymer particle B so as to have a mass ratio of the polymer particles (the polymer particle A-1 and the polymer particle B-1) and the plate-like boehmite of [(polymer particle): (plate-like boehmite) = 30:70], to obtain a slurry for porous membrane having a solid content concentration of 25%. Except for thus obtaining slurry for porous membrane, the slurry for porous membrane, the electrode with porous membrane and the coin shaped lithium-ion secondary battery were obtained to measure output characteristics and cycle characteristics as in Example 1.

(Example 11)

In the preparation of the slurry for porous membrane, plate-like boehmite (average particle diameter of 1 $\mu$m and aspect ratio of 10) was added in addition to the water dispersions of the polymer particle A and the water dispersions of the polymer particle B so as to have a mass ratio of the polymer particles (the polymer particle A-2 and the polymer particle B-1) and the plate-like boehmite of [(polymer particle): (plate-like boehmite) = 30:70], to obtain a slurry for porous membrane having a solid content concentration of 25%. Except for thus obtaining slurry for porous membrane, the slurry for porous membrane, the electrode with porous membrane and the coin shaped lithium-ion secondary battery were obtained to measure output characteristics and cycle characteristics as in Example 2.

(Example 12)

In the preparation of the slurry for porous membrane, plate-like boehmite (average particle diameter of 1 $\mu$m and aspect ratio of 10) was added in addition to the water dispersions of the polymer particle A and the water dispersions of the polymer particle B so as to have a mass ratio of the polymer particles (the polymer particle A-1 and the polymer particle B-1) and the plate-like boehmite of [(polymer particle): (plate-like boehmite) = 30:70], to obtain a slurry for porous membrane having a solid content concentration of 25%. Except for thus obtaining slurry for porous membrane, the slurry for porous membrane, the electrode with porous membrane and the coin shaped lithium-ion secondary battery were obtained to measure output characteristics and cycle characteristics as in Example 8.

(Example 13)

In the preparation of the slurry for porous membrane, aromatic polyamide short fiber (short fiber having fineness of single fiber: 0.55 dtex (0.5 de) and cut length: 1 mm made of copolyparaphenylene-3,4'-oxydiphenyleneterephthalic amide, having an aspect ratio of 200 and a melting point of 187°C, "TECHNORA" by Teijin Limited) was added in addition to the water dispersions of the polymer particle A and the water dispersions of the polymer particle B so as to have a mass ratio of the polymer particles (the polymer particle A-1 and the polymer particle B-1) and the aromatic polyamide fiber of [(polymer particle): (aromatic polyamide fiber) = 50:50], to obtain a slurry for porous membrane having a solid content concentration of 20%. Except for thus obtaining slurry for porous membrane, the slurry for porous membrane, the electrode with porous membrane and the coin shaped lithium-ion secondary battery were obtained to measure output characteristics and cycle characteristics as in Example 1.

(Example 14)

In the preparation of the slurry for porous membrane, aromatic polyamide short fiber (short fiber having fineness of single fiber: 0.55 dtex(0.5 de) and cut length: 1 mm made of copolyparaphenylene-3,4'-oxydiphenyleneterephthalic amide, having an aspect ratio of 200 and a melting point of 187°C, "TECHNORA" by Teijin Limited) was added in addition to the water dispersions of the polymer particle A and the water dispersions of the polymer particle B so as to have a mass ratio of the polymer particles (the polymer particle A-2 and the polymer particle B-1) and the aromatic polyamide fiber of [(polymer particle): (aromatic polyamide fiber) = 50:50], to obtain a slurry for porous membrane having a solid content concentration of 20%. Except for thus obtaining slurry for porous membrane, the slurry for porous membrane, the electrode with porous membrane and the coin shaped lithium-ion secondary battery were obtained to measure output characteristics and cycle characteristics as in Example 2.

(Example 15)

In the preparation of the slurry for porous membrane, aromatic polyamide short fiber (short fiber having fineness of single fiber: 0.55 dtex(0.5 de) and cut length: 1 mm made of copolyparaphenylene-3,4'-oxydiphenyleneterephthalic amide, having an aspect ratio of 200 and a melting point of 187°C, "TECHNORA" by Teijin Limited) was added in addition to the water dispersions of the polymer particle A and the water dispersions of the polymer particle B so as to have a mass ratio of the polymer particles (the polymer particle A-1 and the polymer particle B-1) and the aromatic polyamide fiber of [(polymer particle): (aromatic polyamide fiber) = 50:50], to obtain a slurry for porous membrane having a solid content concentration of 20%. Except for thus obtaining slurry for porous membrane, the slurry for porous membrane, the electrode with porous membrane and the coin shaped lithium-ion secondary battery were obtained to measure output characteristics and cycle characteristics as in Example 8.

(Example 16)

In the preparation of the slurry for porous membrane, polyphenylene sulfide short fiber (short fiber having a melting point of 285°C, fineness of single fiber: 0.55 dtex(0.5de) and cut length: 1 mm, having an aspect ratio of 200) was added in addition to the water dispersions of the polymer particle A and the water dispersions of the polymer particle B so as to have a mass ratio of the polymer particles (the polymer particle A-1 and the polymer particle B-1) and the polyphenylene sulfide short fiber of [(polymer particle): (polyphenylene sulfide short fiber) = 30:70], to obtain a slurry for porous membrane having a solid content concentration of 20%. Except for thus obtaining slurry for porous membrane, the slurry for porous membrane, the electrode with porous membrane and the coin shaped lithium-ion secondary battery were obtained to measure output characteristics and cycle characteristics as in Example 1.

(Example 17)

The obtained slurry for porous membrane in Example 10 was coated on a single-layered polypropylene separator (porosity of 55%) having a width of 65 mm, a length of 500 mm and a thickness of 25 $\mu$m produced by the dry method to have a thickness of the porous membrane layer after drying of 5 $\mu$m by using wire bar, and then dried at 90°C for 10 minutes, so that the porous membrane was formed to obtain a separator with porous membrane.
Except for the above separator with porous membrane as the separator, and using the negative electrode without coating of the porous membrane, the slurry for porous membrane, the separator with porous membrane and the coin shaped lithium-ion secondary battery were obtained to measure output characteristics and cycle characteristics as in Example 1. The results are shown in Table 2.

(Example 18)

In the preparation of the slurry for porous membrane, alumina (average particle diameter of 300 nm, aspect ratio of 1, AKP-30 by Sumitomo Chemical Co., Ltd) was added in addition to the water dispersions of the polymer particle A and the water dispersions of the polymer particle B so as to have a mass ratio of the polymer particles (the polymer particle A-1 and the polymer particle B-1) and the alumina of [(polymer particle): (alumina) = 30:70], to obtain a slurry for porous membrane having a solid content concentration of 25%. Except for thus obtaining slurry for porous membrane, the slurry for porous membrane, the electrode with porous membrane and the coin shaped lithium-ion secondary battery were obtained to measure output characteristics and cycle characteristics as in Example 1.

(Comparative Example 1)

<Production of Polymer Particle A-5>

8 parts of 2-ethyl hexyl acrylate, 4 parts of methyl methacrylate, 0.04 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 62 parts of 2-ethyl hexyl acrylate, 26 parts of methyl methacrylate, 0.3 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle A-5 was obtained. The obtained polymer particle A-5 had a glass-transition temperature of 10°C, and a number average particle diameter was 3 μm.
Except for using the above polymer particle A-5 as the polymer particle A, the slurry for porous membrane, the electrode with porous membrane and the coin shaped lithium-ion secondary battery were obtained to measure output characteristics and cycle characteristics as in Example 1. The results are shown in Table 2.

(Comparative Example 2)

Except for using polymethyl methacrylate particle having a glass-transition temperature of 70°C and a number average particle diameter of 20 μm (MB-30X-20 by Sekisui Plastics Co., Ltd., hereinafter may be referred to as "polymer particle A-6") as the polymer particle A, the slurry for porous membrane, the electrode with porous membrane and the coin shaped lithium-ion secondary battery were obtained to measure output characteristics and cycle characteristics as in Example 1. The results are shown in Table 2.

(Comparative Example 3)

<Production of Polymer Particle B-5>

5 parts of 2-ethyl hexyl acrylate, 7 parts of methyl methacrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 35 parts of 2-ethyl hexyl acrylate, 53 parts of methyl methacrylate, 0.9 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-5 was obtained. The obtained polymer particle B-5 had a glass-transition temperature of 55°C, and a number average particle diameter was 0.1 μm. Also, crystallinity of the polymer particle B-5 was 40% or less, and its main chain structure was saturated structure.
Except for using the above polymer particle B-5 as the polymer particle B, the slurry for porous membrane, the electrode with porous membrane and the coin shaped lithium-ion secondary battery were obtained to measure output characteristics and cycle characteristics as in Example 1. The results are shown in Table 2.

(Comparative Example 4)

< Production of Polymer Particle B-6>

12 parts of n-butyl acrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 88 parts of n-butyl acrylate, 0.2 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-6 was obtained. The obtained polymer particle B-6 had a glass-transition temperature of -55°C, and a number average particle diameter was 1 $\mu$m. Also, crystallinity of the polymer particle B-6 was 40% or less, and its main chain structure was saturated structure.

Except for using the above polymer particle B-6 as the polymer particle B, the slurry for porous membrane, the electrode with porous membrane and the coin shaped lithium-ion secondary battery were obtained to measure output characteristics and cycle characteristics as in Example 1. The results are shown in Table 2.

(Comparative Example 5)

<Production of Polymer Particle B-7>

5 parts of 2-ethyl hexyl acrylate, 7 parts of methyl methacrylate, 0.12 part of sodium lauryl sulfate and 79 parts of ion-exchange water were added to the polymerization can A, and 0.2 part of ammonium persulfate as a polymerization initiator and 10 parts of ion-exchange water were added, heated to 60°C and agitated for 90 minutes, followed by successively adding an emulsion, prepared by adding 50 parts of 2-ethyl hexyl acrylate, 38 parts of methyl methacrylate, 0.9 part of sodium lauryl sulfate and 46 parts of ion-exchange water to another polymerization can B and agitating the same, from the polymerization can B to the polymerization can A for about 180 minutes. It was then agitated for about 120 minutes, and cooled to terminate the reaction when the monomer consumption reached 95%, so that water dispersions of a polymer particle B-7 was obtained. The obtained polymer particle B-7 had a glass-transition temperature of 32°C, and a number average particle diameter was 0.1 $\mu$m. Also, crystallinity of the polymer particle B-7 was 40% or less, and its main chain structure was saturated structure.

Except for using the above polymer particle B-7 as the polymer particle B, the slurry for porous membrane, the electrode with porous membrane and the coin shaped lithium-ion secondary battery were obtained to measure output characteristics and cycle characteristics as in Example 1. The results are shown in Table 2.

[Table 1] -Example 6 does not fall under the scope of the invention as claimed in the appended claims-

Table 1

| | Polymer Particle A | | | | Polymer Particle B | | | |
|---|---|---|---|---|---|---|---|---|
| | Polymer Particle A | Monomer | Average particle diameter ($\mu$m) | Glass-transition temperature (°C) | Polymer Particle B | Monomer | Average particle diameter ($\mu$m) | Glass-transition temperature (°C) |
| Example 1 | Polymer Particle A-1 | ST | 3 | 100 | Polymer Particle B-1 | BA | 0.1 | -55 |
| Example 2 | Polymer Particle A-2 | ST | 7 | 100 | Polymer Particle B-1 | BA | 0.1 | -55 |
| Example 3 | Polymer Particle A-3 | ST | 0.5 | 100 | Polymer Particle B-1 | BA | 0.1 | -55 |
| Example 4 | Polymer Particle A-1 | ST | 3 | 100 | Polymer Particle B-2 | BA | 0.3 | -55 |
| Example 5 | Polymer Particle A-1 | ST | 3 | 100 | Polymer Particle B-3 | BA | 0.05 | -55 |
| Example 6 | Polymer Particle A-4 | MMA | 3 | 70 | Polymer Particle B-1 | BA | 0.1 | -55 |
| Example 7 | Polymer Particle A-1 | ST | 3 | 100 | Polymer Particle B-4 | 2EHA/MMA=70/30 | 0.1 | 10 |
| Example 8 | Polymer Particle A-1 | ST | 3 | 100 | Polymer Particle B-1 | BA | 0.1 | -55 |
| Example 9 | Polymer Particle A-1 | ST | 3 | 100 | Polymer Particle B-1 | BA | 0.1 | -55 |

(continued)

| | Polymer Particle A | | | | Polymer Particle B | | | |
|---|---|---|---|---|---|---|---|---|
| | Polymer Particle A | Monomer | Average particle diameter ($\mu$ m) | Glass-transition temperature (°C) | Polymer Particle B | Monomer | Average particle diameter ($\mu$ m) | Glass-transition temperature (°C) |
| Example 10 | Polymer Particle A-1 | ST | 3 | 100 | Polymer Particle B-1 | BA | 0.1 | -55 |
| Example 11 | Polymer Particle A-2 | ST | 7 | 100 | Polymer Particle B-1 | BA | 0.1 | -55 |
| Example 12 | Polymer Particle A-1 | ST | 3 | 100 | Polymer Particle B-1 | BA | 0.1 | -55 |
| Example 13 | Polymer Particle A-1 | ST | 3 | 100 | Polymer Particle B-1 | BA | 0.1 | -55 |
| Example 14 | Polymer Particle A-2 | ST | 7 | 100 | Polymer Particle B-1 | BA | 0.1 | -55 |
| Example 15 | Polymer Particle A-1 | ST | 3 | 100 | Polymer Particle B-1 | BA | 0.1 | -55 |
| Example 16 | Polymer Particle A-1 | ST | 3 | 100 | Polymer Particle B-1 | BA | 0.1 | -55 |
| Example 17 | Polymer Particle A-1 | ST | 3 | 100 | Polymer Particle B-1 | BA | 0.1 | -55 |
| Example 18 | Polymer Particle A-1 | ST | 3 | 100 | Polymer Particle B-1 | BA | 0.1 | -55 |

| | Polymer Particle A | | | | Polymer Particle B | | | |
|---|---|---|---|---|---|---|---|---|
| | Polymer Particle A | Monomer | Average particle diameter ($\mu$m) | Glass-transition temperature (°C) | Polymer Particle B | Monomer | Average particle diameter ($\mu$m) | Glass-transition temperature (°C) |
| Comparative Example 1 | Polymer Particle A-5 | 2EHA/MMA=70/30 | 3 | 10 | Polymer Particle B-1 | BA | 0.1 | -55 |
| Comparative Example 2 | Polymer Particle A-6 | MMA | 20 | 70 | Polymer Particle B-1 | BA | 0.1 | -55 |
| Comparative example 3 | Polymer Particle A-1 | ST | 3 | 100 | Polymer Particle B-5 | 2EHA/MMA=40/60 | 0.1 | 55 |
| Comparative Example 4 | Polymer Particle A-1 | ST | 3 | 100 | Polymer Particle B-6 | BA | 1.0 | -55 |
| Comparative Example 5 | Polymer Particle A-1 | ST | 3 | 100 | Polymer Particle B-7 | 2EHA/MMA=55/45 | 0.1 | 32 |
| * ST = styrene; MMA=methyl methacrylate; BA=butyl acrylate; 2EHA=2-ethyl hexyl acrylate. | | | | | | | | |

In Table 1, "ST" means styrene, "MMA" means methyl methacrylate, "2EHA" means 2-ethyl hexyl acrylate, and "BA" means butyl acrylate.

[Table 2]

Table 2

| | Polymer Particle A | Polymer Particle B | A/B mass ratio | Nonconductive particle | Aspect ratio | Where to form an electrode | Load characteristics | | | Cycle characteristics | |
|---|---|---|---|---|---|---|---|---|---|---|---|
| | | | | | | | 5C | 10C | 20C | 25°C | 60°C |
| | | | | | | | Evaluation | Evaluation | Evaluation | Evaluation | Evaluation |
| Example 1 | Polymer Particle A-1 | Polymer Particle B-1 | 97/3 | / | / | EMML | A | A | A | A | A |
| Example 2 | Polymer Particle A-2 | Polymer Particle B-1 | 97/3 | / | / | EMML | A | B | C | A | B |
| Example 3 | Polymer Particle A-3 | Polymer Particle B-1 | 97/3 | / | / | EMML | A | C | C | A | B |
| Example 4 | Polymer Particle A-1 | Polymer Particle B-2 | 97/3 | / | / | EMML | A | B | C | A | B |
| Example 5 | Polymer Particle A-1 | Polymer Particle B-3 | 97/3 | / | / | EMML | A | B | C | A | B |
| Example 6 | Polymer Particle A-4 | Polymer Particle B-1 | 97/3 | / | / | EMML | A | C | C | A | B |
| Example 7 | Polymer Particle A-1 | Polymer Particle B-4 | 97/3 | / | / | EMML | A | C | C | A | B |
| Example 8 | Polymer Particle A-1 | Polymer Particle B-1 | 75/25 | / | / | EMML | A | B | C | A | B |
| Example 9 | Polymer Particle A-1 | Polymer Particle B-1 | 97/3 | / | / | Separator | A | A | A | A | A |

EP 2 485 295 B1

28

| | Polymer Particle A | Polymer Particle B | A/B mass ratio | Nonconductive particle | Aspect ratio | Where to form an electrode | Load characteristics | | | Cycle characteristics | |
|---|---|---|---|---|---|---|---|---|---|---|---|
| | | | | | | | 5C | 10C | 20C | 25°C | 60°C |
| | | | | | | | Evaluation | Evaluation | Evaluation | Evaluation | Evaluation |
| Example 10 | Polymer Particle A-1 | Polymer Particle B-1 | 97/3 | Plate-like boehmite | 10 | EMML | SA | A | A | SA | A |
| Example 11 | Polymer Particle A-2 | Polymer Particle B-1 | 97/3 | Plate-like boehmite | 10 | EMML | A | A | B | A | A |
| Example 12 | Polymer Particle A-1 | Polymer Particle B-1 | 75/25 | Plate-like boehmite | 10 | EMML | A | A | B | A | A |
| Example 13 | Polymer Particle A-1 | Polymer Particle B-1 | 97/3 | Aromatic polyamide short fiber | 200 | EMML | SA | A | A | SA | A |
| Example 14 | Polymer Particle A-2 | Polymer Particle B-1 | 97/3 | Aromatic polyamide short fiber | 200 | EMML | A | A | B | A | A |
| Example 15 | Polymer Particle A-1 | Polymer Particle B-1 | 75/25 | Aromatic polyamide short fiber | 200 | EMML | A | A | B | A | A |
| Example 16 | Polymer Particle A-1 | Polymer Particle B-1 | 97/3 | Polyphenylene sulfide short fiber | 200 | EMML | SA | A | A | SA | A |
| Example 17 | Polymer Particle A-1 | Polymer Particle B-1 | 97/3 | Plate-like boehmite | 10 | Separator | SA | A | A | SA | A |
| Example 18 | Polymer Particle A-1 | Polymer Particle B-1 | 97/3 | Alumina | 1 | EMML | A | A | A | SA | A |

EP 2 485 295 B1

| | Polymer Particle A | Polymer Particle B | A/B mass ratio | Nonconductive particle | Aspect ratio | Where to form an electrode | Load characteristics | | | Cycle characteristics | |
|---|---|---|---|---|---|---|---|---|---|---|---|
| | | | | | | | 5C | 10C | 20C | 25°C | 60°C |
| | | | | | | | Evaluation | Evaluation | Evaluation | Evaluation | Evaluation |
| Comparative Example 1 | Polymer Particle A-5 | Polymer Particle B-1 | 97/3 | / | / | EMML | D | E | E | D | E |
| Comparative Example 2 | Polymer Particle A-6 | Polymer Particle B-1 | 97/3 | / | / | EMML | D | E | E | D | E |
| Comparative Example 3 | Polymer Particle A-1 | Polymer Particle B-5 | 97/3 | / | / | EMML | D | E | E | D | D |
| Comparative Example 4 | Polymer Particle A-1 | Polymer Particle B-6 | 97/3 | / | / | EMML | D | E | E | D | E |
| Comparative Example 5 | Polymer Particle A-1 | Polymer Particle B-7 | 97/3 | / | / | EMML | C | D | D | C | C |
| * EMML = Electrode material mixture layer | | | | | | | | | | | |

EP 2 485 295 B1

According to the present invention, by using the polymer particle A, having a number average particle diameter of 0.4 μm or more to less than 10 μm and a glass-transition point of 65°C or more, and the polymer particle B, having a number average particle diameter of 0.04 μm or more to less than 0.3 μm and a glass-transition point of 15°C or less, as shown in Example 1 to Example 18, it was possible to obtain a lithium secondary battery having good load characteristics and cycle characteristics. Also, among the examples, Examples 10, 13 and 16, in which polystyrene particle having a glass-transition temperature of 100°C and a number average particle diameter of 3 μm and poly-n-butyl acrylate particle having a glass-transition temperature of -55°C and a number average particle diameter of 0.1 μm were used as the polymer particle A and the polymer particle B, respectively, a ratio of the polymer particle A and the polymer particle B was made within the range of 99: 1 to 85: 15, and nonconductive particle having a melting point of 160°C or more and an aspect ratio of 5 or more was further added were most excellent in load characteristics and cycle characteristics. On the other hand, in the Comparative Example 1 in which the polymer particle A having a glass-transition temperature out of the predetermined range was used, in Comparative Example 2 in which the polymer particle A having a number average particle diameter out of the predetermined range was used, in Comparative Example 3 and Comparative Example 5 in which the polymer particle B having high glass-transition point was used, and in Comparative Example 4 in which the polymer particle B having a number average particle diameter out of the predetermined range was used, at least one of load characteristics and cycle characteristics was remarkably deteriorated.

## Claims

1.    A porous membrane for a secondary battery comprising a polymer particle A, wherein the polymer constituting the polymer particle A is a styrene-based polymer, having a number average particle diameter of 0.4 μm or more to less than 10 μm and a glass-transition point of 65°C or more, and a polymer particle B, wherein the monomer consituting the polymer particle B includes an acrylic monomer or a methacrylic monomer, having a number average particle diameter of 0.04 μm or more to less than 0.3 μm and a glass-transition point of 15°C or less.

2.    The porous membrane for a secondary battery as set forth in claim 1, wherein crystallinity of the polymer particle B is 40% or less, and its main chain structure is saturated structure.

3.    The porous membrane for a secondary battery as set forth in claim 1 or 2, further including a nonconductive particle having a melting point of 160°C or more.

4.    The porous membrane for a secondary battery as set forth in claim 3, wherein an aspect ratio of said nonconductive particle is 5 or more.

5.    The porous membrane for a secondary battery as set forth in any one of claims 1 to 4, wherein the styrene-based polymer is a polymer of aromatic vinyl monomers selected from the group consisting of styrene, chlorostyrene, vinyl toluene, t-butylstyrene, vinyl benzoate, methyl vinyl benzoate, vinylnaphthalene, chloromethyl styrene, hydroxy methyl styrene, α-methyl styrene, 2,4-dimethyl styrene, and divinylbenzene.

6.    The porous membrane for a secondary battery as set forth in any one of claims 1 to 5, wherein the content of aromatic vinyl monomer units in the styrene-based polymer is 60 mass% to 100 mass%.

7.    The porous membrane for a secondary battery as set forth in any one of claims 1 to 6, wherein the acrylic monomer or methacrylic monomer is an acrylic acid alkyl ester or methacrylic acid alkyl ester.

8.    The porous membrane for a secondary battery as set forth in claim 7, wherein the acrylic acid alkyl ester is selected from the group consisting of acrylic acid methyl ester, acrylic acid ethyl ester, acrylic acid propyl ester, acrylic acid isopropyl ester, acrylic acid butyl ester, acrylic acid-sec-butyl ester, acrylic acid-3-pentyl ester, acrylic acid heptyl ester, acrylic acid hexyl ester, acrylic acid octyl ester, acrylic acid hexadecyl ester, acrylic acid-1-ethyl propyl ester, acrylic acid cyclohexyl ester, acrylic acid phenyl ester, acrylic acid benzyl ester, acrylic acid-3-methoxypropyl ester, acrylic acid-3-methoxybutyl ester, acrylic acid-2-ethoxymethyl ester, acrylic acid-3-ethoxypropyl ester, acrylic acid-4-butoxycarbonyl phenyl ester, acrylic acid-4-cyanoethyl ester, acrylic acid-4-cyano-3-thiabutyl ester, acrylic acid-6-cyano-3-thia hexyl ester, acrylic acid-1H,H-heptafluorobutyl ester, acrylic acid-2,2,2-trifluoroethyl ester, acrylic acid-5,5,5-trifluoro-3-oxapentyl ester, acrylic acid-4,4,5,5-tetrafluoro-3-hexapentyl ester, acrylic acid-2,2,3,3,3,5,5-heptafluoro-4-oxapentyl ester, acrylic acid-7,7,8,8-tetrafluoro-3,6-dioxaoctyl ester, acrylic acid-3-thiabutyl ester, acrylic acid-4-thiahexyl ester, acrylic acid-3-thiapentyl ester and acrylic acid-3-thia hexyl ester.

9. The porous membrane for a secondary battery as set forth in claim 7, wherein the methacrylic acid alkyl ester is selected from the group consisting of methacrylic acid methyl ester, methacrylic acid ethyl ester, methacrylic acid propyl ester, methacrylic acid isopropyl ester, methacrylic acid butyl ester, methacrylic acid-sec-butyl ester, methacrylic acid-3-pentyl ester, methacrylic acid heptyl ester, methacrylic acid hexyl ester, methacrylic acid octyl ester, methacrylic acid decyl ester, methacrylic acid-3,5,5-trimethyl hexyl ester, methacrylic acid hexadecyl ester, methacrylic acid-1-ethyl propyl ester, methacrylic acid cyclohexyl ester, methacrylic acid phenyl ester, methacrylic acid benzyl ester, methacrylic acid-3-methoxypropyl ester, methacrylic acid-3-methoxybutyl ester, methacrylic acid-2-ethoxymethyl ester, methacrylic acid-3-ethoxypropyl ester, methacrylic acid-4-butoxycarbonyl phenyl ester, methacrylic acid-4-cyano ethyl ester, methacrylic acid-4-cyano-3-thiabutyl ester, methacrylic acid-6-cyano-3-thiahexyl ester, methacrylic acid-1H,H-heptafluoro butyl ester, methacrylic acid-2,2,2-trifluoroethyl ester, methacrylic acid-5,5,5-trifluoro-3-oxapentyl ester, methacrylic acid-4,4,5,5-tetrafluoro-3-hexapentyl ester, methacrylic acid-2,2,3,3,3,5,5-heptafluoro-4-oxapentyl ester, methacrylic acid-7,7,8,8-tetrafluoro-3,6-dioxaoctyl ester, methacrylic acid-3-thiabutyl ester, methacrylic acid-4-thiahexyl ester, methacrylic acid-3-thiapentyl ester and methacrylic acid-3-thiahexyl ester.

10. A slurry for porous membrane of a secondary battery, comprising a polymer particle A wherein the polymer constituting the polymer particle A is a styrene-based polymer, having a number average particle diameter of 0.4 $\mu$m or more to less than 10 $\mu$m and a glass-transition point of 65°C or more, a polymer particle B, wherein the monomer consituting the polymer particle B includes an acrylic monomer or a methacrylic monomer, having a number average particle diameter of 0.04 $\mu$m or more to less than 0.3 $\mu$m and a glass-transition point of 15°C or less, and a solvent.

11. A method of producing a porous membrane for a secondary battery, comprising: coating a slurry for porous membrane of a secondary battery onto a base material, the slurry comprising a polymer particle A, wherein the polymer constituting the polymer particle A is a styrene-based polymer, having a number average particle diameter of 0.4 $\mu$m or more to less than 10 $\mu$m and a glass-transition point of 65°C or more, a polymer particle B, wherein the monomer consituting the polymer particle B includes an acrylic monomer or a methacrylic monomer, having a number average particle diameter of 0.04 $\mu$m or more to less than 0.3 $\mu$m and a glass-transition point of 15°C or less and solvent.

12. A secondary battery electrode, wherein an electrode material mixture layer comprising binder for an electrode material mixture layer and electrode active material is attached to a collector; and the porous membrane as set forth in any one of claims 1 to 9 is stacked on a surface of the electrode material mixture layer.

13. A separator for a secondary battery, wherein the porous membrane as set forth in any one of claims 1 to 9 is stacked on an organic separator.

14. A secondary battery comprising a positive electrode, a negative electrode, a separator and an electrolytic solution, wherein the porous membrane as set forth in any one of claims 1 to 9 is stacked on at least any one of the above positive electrode, negative electrode and separator.

**Patentansprüche**

1. Eine poröse Membran für eine Sekundärbatterie umfassend ein Polymerpartikel A, wobei das Polymer, aus dem das Polymerpartikel A besteht, ein styrolbasiertes Polymer ist, mit einem zahlenmäßigen Durchschnitts-Partikeldurchmesser von 0,4 $\mu$m oder mehr bis weniger als 10 $\mu$m, und mit einem Glasübergangspunkt von 65°C oder mehr, und ein Polymerpartikel B, wobei das Monomer, aus dem das Polymerpartikel B besteht, ein Acrylmonomer oder ein Methacrylmonomer umfasst, mit einem zahlenmäßigen Durchschnitts-Partikeldurchmesser von 0,04 $\mu$m oder mehr bis weniger als 0,3 $\mu$m, und mit einem Glasübergangspunkt von 15°C oder weniger.

2. Die poröse Membran für eine Sekundärbatterie gemäß Anspruch 1, wobei die Kristallinität des Polymerpartikels B 40% oder weniger ist, und seine Hauptkettenstruktur eine gesättigte Struktur ist.

3. Die poröse Membran für eine Sekundärbatterie gemäß Anspruch 1 oder 2, des Weiteren umfassend ein nichtleitfähiges Partikel mit einem Schmelzpunkt von 160°C oder mehr.

4. Die poröse Membran für eine Sekundärbatterie gemäß Anspruch 3, wobei ein Seitenverhältnis dieses nichtleitfähigen Partikels 5 oder mehr beträgt.

**5.** Die poröse Membran für eine Sekundärbatterie gemäß irgendeinem der Ansprüche 1 bis 4, wobei das styrolbasierte Polymer ein Polymer aus aromatischen Vinylmonomeren ist, ausgewählt aus der Gruppe bestehend aus Styrol, Chlorstyrol, Vinyltoluol, t-Butylstyrol, Vinylbenzoat, Methylvinylbenzoat, Vinylnaphthalin, Chlormethylstyrol, Hydroxymethylstyrol, $\alpha$-Methylstyrol, 2,4-Dimethylstyrol, und Divinylbenzol.

**6.** Die poröse Membran für eine Sekundärbatterie gemäß irgendeinem der Ansprüche 1 bis 5, wobei der Gehalt an aromatischen Vinylmonomereinheiten in dem styrolbasierten Polymer 60 Masse-% bis 100 Masse-% beträgt.

**7.** Die poröse Membran für eine Sekundärbatterie gemäß irgendeinem der Ansprüche 1 bis 6, wobei das Acrylmonomer oder Methacrylmonomer ein Acrylsäurealkylester oder Methacrylsäurealkylester ist.

**8.** Die poröse Membran für eine Sekundärbatterie gemäß Anspruch 7, wobei der Acrylsäurealkylester ausgewählt ist aus der Gruppe bestehend aus Acrylsäuremethylester, Acrylsäureethylester, Acrylsäurepropylester, Acrylsäureisopropylester, Acrylsäurebutylester, Acrylsäure-sec-butylester, Acrylsäure-3-pentylester, Acrylsäureheptylester, Acrylsäurehexylester, Acrylsäureoctylester, Acrylsäurehexadecylester, Acrylsäure-1-ethylpropylester, Acrylsäurecyclohexylester, Acrylsäurephenylester, Acrylsäurebenzylester, Acrylsäure-3-methoxypropylester, Acrylsäure-3-methoxybutylester, Acrylsäure-2-ethoxymethylester, Acrylsäure-3-ethoxypropylester, Acrylsäure-4-butoxycarbonylphenylester, Acrylsäure-4-cyanoethylester, Acrylsäure-4-cyano-3-thiabutylester, Acrylsäure-6-cyano-3-thiahexylester, Acrylsäure-1H,H-heptafluoro-butylester, Acrylsäure-2,2,2-trifluoroethylester, Acrylsäure-5,5,5-trifluoro-3-oxapentylester, Acrylsäure-4,4,5,5-tetrafluoro-3-hexapentylester, Acrylsäure-2,2,3,3,3,5,5-heptafluoro-4-oxapentylester, Acrylsäure-7,7,8,8-tetrafluoro-3,6-dioxaoctylester, Acrylsäure-3-thiabutylester, Acrylsäure-4-thiahexylester, Acrylsäure-3-thiapentylester und Acrylsäure-3-thiahexylester.

**9.** Die poröse Membran für eine Sekundärbatterie gemäß Anspruch 7, wobei der Methacrylsäurealkylester ausgewählt ist aus der Gruppe bestehend aus Methacrylsäuremethylester, Methacrylsäureethylester, Methacrylsäurepropylester, Methacrylsäureisopropylester, Methacrylsäurebutylester, Methacrylsäure-sec-butylester, Methacrylsäure-3-pentylester, Methacrylsäureheptylester, Methacrylsäurehexylester, Methacrylsäureoctylester, Methacrylsäuredecylester, Methacrylsäure-3,5,5-trimethylhexylester, Methacrylsäurehexadecylester, Methacrylsäure-1-ethylpropylester, Methacrylsäurecyclohexylester, Methacrylsäurephenylester, Methacrylsäurebenzylester, Methacrylsäure-3-methoxypropylester, Methacrylsäure-3-methoxybutylester, Methacrylsäure-2-ethoxymethylester, Methacrylsäure-3-ethoxypropylester, Methacrylsäure-4-butoxycarbonylphenylester, Methacrylsäure-4-cyanoethylester, Methacrylsäure-4-cyano-3-thiabutylester, Methacrylsäure-6-cyano-3-thiahexylester, Methacrylsäure-1H,H-heptafluorobutylester, Methacrylsäure-2,2,2-trifluoroethylester, Methacrylsäure-5,5,5-trifluoro-3-oxapentylester, Methacrylsäure-4,4,5,5-tetrafluoro-3-hexapentylester, Methacrylsäure-2,2,3,3,3,5,5-heptafluoro-4-oxapentylester, Methacrylsäure-7,7,8,8-tetrafluoro-3,6-dioxaoctylester, Methacrylsäure-3-thiabutylester, Methacrylsäure-4-thiahexylester, Methacrylsäure-3-thiapentylester und Methacrylsäure-3-thiahexylester.

**10.** Eine Aufschlämmung für eine poröse Membran einer Sekundärbatterie, umfassend ein Polymerpartikel A, wobei das Polymer, aus dem das Polymerpartikel A besteht, ein styrolbasiertes Polymer ist, mit einem zahlenmäßigen Durchschnitts-Partikeldurchmesser von 0,4 $\mu$m oder mehr bis weniger als 10 $\mu$m, und mit einem Glasübergangspunkt von 65°C oder mehr, ein Polymerpartikel B, wobei das Monomer, aus dem das Polymerpartikel B besteht, ein Acrylmonomer oder ein Methacrylmonomer umfasst, mit einem zahlenmäßigen Durchschnitts-Partikeldurchmesser von 0,04 $\mu$m oder mehr bis weniger als 0,3 $\mu$m, und mit einem Glasübergangspunkt von 15°C oder weniger, und ein Lösemittel.

**11.** Ein Verfahren zur Herstellung einer porösen Membran für eine Sekundärbatterie, umfassend: Beschichten eines Trägermaterials mit einer Aufschlämmung für eine poröse Membran einer Sekundärbatterie, die Aufschlämmung umfassend ein Polymerpartikel A, wobei das Polymer, aus dem das Polymerpartikel A besteht, ein styrolbasiertes Polymer ist, mit einem zahlenmäßigen Durchschnitts-Partikeldurchmesser von 0,4 $\mu$m oder mehr bis weniger als 10 $\mu$m, und mit einem Glasübergangspunkt von 65°C oder mehr, ein Polymerpartikel B, wobei das Monomer, aus dem das Polymerpartikel B besteht, ein Acrylmonomer oder ein Methacrylmonomer umfasst, mit einem zahlenmäßigen Durchschnitts-Partikeldurchmesser von 0,04 $\mu$m oder mehr bis weniger als 0,3 $\mu$m, und mit einem Glasübergangspunkt von 15°C oder weniger, und ein Lösemittel.

**12.** Eine Sekundärbatterie-Elektrode, worin eine Elektrodenmaterialmischungs-Schicht umfassend ein Bindemittel für eine Elektrodenmaterialmischungs-Schicht und elektrodenaktives Material auf einem Kollektor aufgebracht ist; und die poröse Membran gemäß irgendeinem der Ansprüche 1 bis 9 gestapelt ist auf eine Oberfläche der Elektrodenmaterialmischungs-Schicht.

**13.** Ein Separator für eine Sekundärbatterie, worin die poröse Membran gemäß irgendeinem der Ansprüche 1 bis 9 gestapelt ist auf einen organischen Separator.

**14.** Eine Sekundärbatterie umfassend eine positive Elektrode, eine negative Elektrode, einen Separator und eine Elektrolyt-Lösung, worin die poröse Membran gemäß irgendeinem der Ansprüche 1 bis 9 gestapelt ist auf mindestens ein beliebiges von dieser positiven Elektrode, negativen Elektrode und Separator.

**Revendications**

**1.** Membrane poreuse pour une batterie secondaire, comprenant une particule polymère A, le polymère constituant la particule polymère A étant un polymère à base de styrène, ayant un diamètre de particule moyen en nombre de 0,4 $\mu$m ou plus à moins de 10 $\mu$m et un point de transition vitreuse de 65° C ou plus, et une particule polymère B, le monomère constituant la particule polymère B comprenant un monomère acrylique ou un monomère méthacrylique, ayant un diamètre de particule moyen en nombre de 0,04 $\mu$m ou plus à moins de 0,3 $\mu$m et un point de transition vitreuse de 15° C ou moins.

**2.** Membrane poreuse pour une batterie secondaire selon la revendication 1, dans laquelle la cristallinité de la particule polymère B est de 40% ou moins, et sa structure de chaîne principale est une structure saturée.

**3.** Membrane poreuse pour une batterie secondaire selon la revendication 1 ou 2, comprenant de plus une particule non conductrice ayant un point de fusion de 160° C ou plus.

**4.** Membrane poreuse pour une batterie secondaire selon la revendication 3, dans laquelle un rapport d'aspect de ladite particule non conductrice est de 5 ou plus.

**5.** Membrane poreuse pour une batterie secondaire selon l'une quelconque des revendications 1 à 4, dans laquelle le polymère à base de styrène est un polymère de monomères vinyliques aromatiques sélectionnés parmi le groupe comprenant le styrène, le chlorostyrène, le vinyltoluène, le t-butylstyrène, le benzoate de vinyle, le benzoate de méthyle et de vinyle, le vinylnaphtalène, le chlorométhylstyrène, l'hydroxyméthylstyrène, l'a-méthylstyrène, le 2,4-diméthylstyrène et le divinylbenzène.

**6.** Membrane poreuse pour une batterie secondaire selon l'une quelconque des revendications 1 à 5, dans laquelle la proportion d'unités de monomère vinylique aromatique dans le polymère à base de styrène est comprise entre 60% en masse et 100% en masse.

**7.** Membrane poreuse pour une batterie secondaire selon l'une quelconque des revendications 1 à 6, dans laquelle le monomère acrylique ou le monomère méthacrylique est un ester alkylique d'acide acrylique ou un ester alkylique d'acide méthacrylique.

**8.** Membrane poreuse pour une batterie secondaire selon la revendication 7, dans laquelle l'ester alkylique d'acide acrylique est sélectionné parmi le groupe comprenant un ester méthylique d'acide acrylique, un ester éthylique d'acide acrylique, un ester propylique d'acide acrylique, un ester isopropylique d'acide acrylique, un ester butylique d'acide acrylique, un ester de sec-butyle d'acide acrylique, un ester de 3-pentyle d'acide acrylique, un ester heptylique d'acide acrylique, un ester hexylique d'acide acrylique, un ester octylique d'acide acrylique, un ester hexadécylique d'acide acrylique, un ester de 1-éthylpropyle d'acide acrylique, un ester cyclohexylique d'acide acrylique, un ester phénylique d'acide acrylique, un ester benzylique d'acide acrylique, un ester de 3-méthoxypropyle d'acide acrylique, un ester de 3-méthoxybutyle d'acide acrylique, un ester de 2-éthoxyméthyle d'acide acrylique, un ester de 3-éthoxypropyle d'acide acrylique, un ester de 4-butoxycarbonylphényle d'acide acrylique, un ester de 4-cyanoéthyle d'acide acrylique, un ester de 4-cyano-3-thiabutyle d'acide acrylique, un ester de 6-cyano-3-thiahexyle d'acide acrylique, un ester de 1H,H-heptafluorobutyle d'acide acrylique, un ester de 2,2,2-trifluoroéthyle d'acide acrylique, un ester de 5,5,5-trifluoro-3-oxapentyle d'acide acrylique, un ester de 4,4,5,5-tétrafluoro-3-hexapentyle d'acide acrylique, un ester de 2,2,3,3,3,5,5-heptafluoro-4-oxapentyle d'acide acrylique, un ester de 7,7,8,8-tétrafluoro-3,6-dioxaoctyle d'acide acrylique, un ester de 3-thiabutyle d'acide acrylique, un ester de 4-thiahexyle d'acide acrylique, un ester de 3-tiapentyle d'acide acrylique et un ester de 3-thiahexyle d'acide acrylique.

**9.** Membrane poreuse pour une batterie secondaire selon la revendication 7, dans laquelle l'ester alkylique d'acide méthacrylique est sélectionné parmi le groupe comprenant un ester méthylique d'acide méthacrylique, un ester éthylique d'acide méthacrylique, un ester propylique d'acide méthacrylique, un ester isopropylique d'acide méthacrylique, un ester butylique d'acide méthacrylique, un ester de sec-butyle d'acide méthacrylique, un ester de 3-pentyle d'acide méthacrylique, un ester heptylique d'acide méthacrylique, un ester hexylique d'acide méthacrylique, un ester octylique d'acide méthacrylique, un ester décylique d'acide méthacrylique, un ester de 3,5,5-triméthylhexyle d'acide méthacrylique, un ester hexadécylique d'acide méthacrylique, un ester de 1-éthylpropyle d'acide méthacrylique, un ester cyclohexylique d'acide méthacrylique, un ester phénylique d'acide méthacrylique, un ester benzylique d'acide méthacrylique, un ester de 3-méthoxypropyle d'acide méthacrylique, un ester de 3-méthoxybutyle d'acide méthacrylique, un ester de 2-éthoxyméthyle d'acide méthacrylique, un ester de 3-éthoxypropyle d'acide méthacrylique, un ester de 4-butoxycarbonylphényle d'acide méthacrylique, un ester de 4-cyanoéthyle d'acide méthacrylique, un ester de 4-cyano-3-thiabutyle d'acide méthacrylique, un ester de 6-cyano-3-thiahexyle d'acide méthacrylique, un ester de 1H,H-heptafluorobutyle d'acide méthacrylique, un ester de 2,2,2-trifluoroéthyle d'acide méthacrylique, un ester de 5,5,5-trifluoro-3-oxapentyle d'acide méthacrylique, un ester de 4,4,5,5-tétrafluoro-3-hexapentyle d'acide méthacrylique, un ester de 2,2,3,3,3,5,5-heptafluoro-4-oxapentyle d'acide méthacrylique, un ester de 7,7,8,8-tétrafluoro-3,6-dioxaoctyle d'acide méthacrylique, un ester de 3-thiabutyle d'acide méthacrylique, un ester de 4-thiahexyle d'acide méthacrylique, un ester de 3-thiapentyle d'acide méthacrylique et un ester de 3-thiahexyle d'acide méthacrylique.

10. Suspension pour membrane poreuse d'une batterie secondaire, comprenant une particule polymère A, le polymère constituant la particule polymère A étant un polymère à base de styrène, ayant un diamètre de particule moyen en nombre de 0,4 μm ou plus à moins de 10 μm et un point de transition vitreuse de 65° C ou plus, une particule polymère B, le monomère constituant la particule polymère B comprenant un monomère acrylique ou un monomère méthacrylique, ayant un diamètre de particule moyen en nombre de 0,04 μm ou plus à moins de 0,3 μm et un point de transition vitreuse de 15° C ou moins, et un solvant.

11. Procédé de production d'une membrane poreuse pour une batterie secondaire, comprenant : le fait de revêtir un matériau de base d'une suspension pour membrane poreuse d'une batterie secondaire, la suspension comprenant une particule polymère A, le polymère constituant la particule polymère A étant un polymère à base de styrène, ayant un diamètre de particule moyen en nombre de 0,4 μm ou plus à moins de 10 μm et un point de transition vitreuse de 65° C ou plus, une particule polymère B, le monomère constituant la particule polymère B comprenant un monomère acrylique ou un monomère méthacrylique, ayant un diamètre de particule moyen en nombre de 0,04 μm ou plus à moins de 0,3 μm et un point de transition vitreuse de 15° C ou moins, et un solvant.

12. Electrode de batterie secondaire, dans laquelle une couche de mélange de matériau d'électrode comprenant un liant pour une couche de mélange de matériau d'électrode et un matériau actif d'électrode est fixée à un collecteur ; et la membrane poreuse selon l'une quelconque des revendications 1 à 9 est empilée sur une surface de la couche de mélange de matériau d'électrode.

13. Séparateur pour une batterie secondaire, dans lequel la membrane poreuse selon l'une quelconque des revendications 1 à 9 est empilée sur un séparateur organique.

14. Batterie secondaire comprenant une électrode positive, une électrode négative, un séparateur et une solution électrolytique, dans laquelle la membrane poreuse selon l'une quelconque des revendications 1 à 9 est empilée sur au moins l'un quelconque de l'électrode positive, de l'électrode négative et du séparateur ci-dessus.

**REFERENCES CITED IN THE DESCRIPTION**

**Patent documents cited in the description**

- JP 2008004441 A
- JP 2008305783 A
- US 200967119 B
- JP 2006139978 A
- JP 2006164761 A
- US 2007264577 A
- EP 1965454 A1